(19) Europäisches Patentamt
European Patent Office
Office européen des brevets

(11) **EP 4 319 242 A1**

(12) **EUROPEAN PATENT APPLICATION**
published in accordance with Art. 153(4) EPC

(43) Date of publication:
**07.02.2024 Bulletin 2024/06**

(21) Application number: **22778489.9**

(22) Date of filing: **08.03.2022**

(51) International Patent Classification (IPC):
**H04W 16/28** (2009.01)

(52) Cooperative Patent Classification (CPC):
**H04L 1/16; H04L 5/00; H04W 16/28; H04W 72/04**

(86) International application number:
**PCT/CN2022/079722**

(87) International publication number:
**WO 2022/206305 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 CN 202110362116**

(71) Applicant: **Datang Mobile Communications Equipment Co., Ltd.**
**Beijing 100085 (CN)**

(72) Inventors:
• **LIU, Zhengxuan**
**Beijing 100085 (CN)**
• **GAO, Qiubin**
**Beijing 100085 (CN)**
• **SU, Xin**
**Beijing 100085 (CN)**

(74) Representative: **Körfer, Thomas**
**Mitscherlich PartmbB**
**Patent- und Rechtsanwälte**
**Karlstraße 7**
**80333 München (DE)**

(54) **ENHANCED CSI-RS TRANSMISSION METHOD, FEEDBACK INFORMATION SENDING METHOD AND APPARATUS, AND DEVICE AND MEDIUM**

(57)    Disclosed in the present invention are an enhanced channel state information reference signal (CSI-RS) transmission method, a feedback information sending method and apparatus, and a device and a medium, which are used for solving the problems of the sending power of a network side and the feedback overhead of a terminal side being relatively high when the number of beams to be sent is less than the total number of configured CSI-RS antenna ports. In the embodiments of the present disclosure, when the number P of beams to be sent is less than the total number $P_{tot}$ of configured CSI-RS antenna ports, a network side can select, from the configured $P_{tot}$ CSI-RS antenna ports, some CSI-RS antenna ports for sending a beamforming CSI-RS to a terminal side. Compared with a network side needing to send a beamforming CSI-RS on the basis of each configured CSI-RS antenna port in the related art, the sending power of a network side can be effectively reduced; moreover, the feedback overhead of a terminal side can also be effectively reduced.

The network side determines K CSI-RS resources configured for the terminal side, where the K CSI-RS resources include $P_{tot}$ CSI-RS antenna ports in total, where $P_{tot} = \sum_{k=1}^{K} P_k$, $P_k$ is the quantity of CSI-RS antenna ports included in the $k^{th}$ CSI-RS resource, and $k \in [1, K]$. — 300

The network side selects P CSI-RS antenna ports from the $P_{tot}$ CSI-RS antenna ports; and sends beam-formed CSI-RSs to the terminal side through the P CSI-RS antenna ports by using P different beams respectively; where $P < P_{tot}$, and P is the quantity of beams to be sent. — 310

Fig. 3

EP 4 319 242 A1

**Description**

**CROSS-REFERENCE TO RELATED APPLICATIONS**

The present disclosure claims the priority to Chinese patent application No. 202110362116.X filed to China National Intellectual Property Administration on April 02, 2021 and entitled "Enhanced CSI-RS Transmission Method and Apparatus, Method and Apparatus for Sending Feedback Information, Device and Medium", of which the entire contents are incorporated herein by reference.

**Technical Field**

The disclosure relates to the field of communication technology, in particular to an enhanced channel state information reference signal (CSI-RS) transmission method and apparatus, and a method and apparatus for sending feedback information, device and medium.

**Background**

In a 5th generation (5G) new radio (NR) system, a CSI-RS is a very important reference signal.

In the related art, before the user equipment (UE) receives downlink data sent by a network side, the network side needs to send the beam-formed CSI-RSs to the UE by using different beams through various CSI-RS antenna ports. Then, based on the received CSI-RS, the UE selects a beam that meets its own usage requirements and notifies the network side of the beam indication information and beam combination coefficient. The network side obtains downlink pre-coding based on the beam indication information and beam combination coefficient, so that the network side sends the downlink data to the UE based on the downlink pre-coding.

For example, based on a cascaded feedback scheme, the downlink pre-coding used by the network side is represented by the following formula: W=W1W2.

Where, W1 represents the beam indication information fed back by the UE to the network side, and W2 represents the beam combination coefficient fed back by the UE to the network side.

It is assumed that W1 indicates two beams, that is, beams B1 and B2, selected by the UE and that W2 indicates the beam combination coefficient of the beam B1 being a and the beam combination coefficient of beam B2 being b.

Then the downlink pre-coding obtained by the network side is W=a*B1+b*B2, so the network side may send the downlink data to the UE based on the downlink pre-coding W=a*B 1+b*B2.

It can be seen that the network side reasonably sends the beam-formed CSI-RSs by using different beams through various CSI-RS antenna ports, which can ensure that the UE can receive the downlink data sent by the network side in a timely and accurate manner.

On the Rel-15/16 port of the NR system, the network side uses only one beam to perform beam-forming on the CSI-RS and then send the beam-formed CSI-RS on each CSI-RS antenna port.

A beam is a two-dimensional beam including a vertical direction and a horizontal direction, and each two-dimensional beam corresponds to the spatial angle information in the channel information.

On the NR Rel-17 port, the channel information is composed of multiple transmission paths. A transmission path contains a piece of spatial angle information and a piece of time delay information; and one transmission path is associated with one beam, that is, one beam corresponds to one piece of angle information and one piece of time delay information. The angle information can be represented by a spatial domain basis vector, and the time delay information can be represented by a frequency domain basis vector.

Due to the complexity of the environment in which the UE is located, the signal sent from the network side to the UE may pass through more transmission paths to the UE. When the beam-formed CSI-RSs are sent by using beams based on the CSI-RS antenna ports for CSI measurement, since only one beam is allowed to be sent on one CSI-RS antenna port usually, it is necessary to configure more CSI-RS antenna ports for transmitting more beams, to prevent a phenomenon in which part of beam-formed CSI-RSs cannot be sent in time, that is, the beam-formed CSI-RSs cannot be all sent in time and thus the timely and accurate transmission of downlink data is affected, when the quantity of beams to be sent is greater than the total quantity of configured CSI-RS antenna ports.

However, if the quantity of beams to be sent is less than the total quantity of configured CSI-RS antenna ports, in the related art, the beam-formed CSI-RSs still need to be sent based on each configured CSI-RS antenna port, which increases a sending power on the network side, and also increases the feedback overhead on the terminal side at the same time.

It can be seen that a new technical scheme needs to be designed to overcome the above-mentioned defects.

**Summary**

The disclosure provides an enhanced CSI-RS transmission method and apparatus, a method and apparatus for sending feedback information, device and medium, to solve the problem of the high sending power on the network side and the high feedback overhead on the terminal side when the quantity of beams to be sent is less than the total quantity of configured CSI-RS antenna ports.

The specific technical solutions provided by the embodiments of the disclosure are as follows.

In a first aspect, the disclosure provides an enhanced CSI-RS transmission method, including: determining K CSI-RS resources configured for a terminal side, where the K CSI-RS resources include $P_{tot}$ CSI-RS antenna ports in total, where $P_{tot} = \sum_{k=1}^{K} P_k$ , $P_k$ is the quantity of CSI-RS antenna ports in a $k^{th}$ CSI-RS resource, and k E [1, K]; selecting P CSI-RS antenna ports from the $P_{tot}$ CSI-RS antenna ports; and sending beam-formed CSI-RSs to the terminal side through the P CSI-RS antenna ports by using P different beams respectively, where $P < P_{tot}$, and P is the quantity of beams to be sent.

Optionally, the selecting of P CSI-RS antenna ports from the $P_{tot}$ CSI-RS antenna ports includes: determining the P CSI-RS antenna ports selected from the $P_{tot}$ CSI-RS antenna ports according to information of the CSI-RS antenna ports carried in a received signaling indication; or, sorting the K CSI-RS resources based on identification information of the K CSI-RS resources, where the identification information includes at least one of identity documents (IDs) of the CSI-RS resources, a resource mapping position of the CSI-RS resources in a time domain, or a resource mapping position of the CSI-RS resources in a frequency domain; respectively configuring index numbers of the $P_{tot}$ CSI-RS antenna ports based on a sorting result of the K CSI-RS resources; and determining the P CSI-RS antenna ports selected from the $P_{tot}$ CSI-RS antenna ports according to the index numbers of the $P_{tot}$ CSI-RS antenna ports.

Optionally, the configuring of the index numbers of the $P_{tot}$ CSI-RS antenna ports respectively based on the sorting result of the K CSI-RS resources, includes: for each CSI-RS resource in the K CSI-RS resources, sequentially performing joint numbering on index numbers of the CSI-RS antenna ports in each CSI-RS resource based on the sorting result of the K CSI-RS resources; where the determining of the P CSI-RS antenna ports selected from the $P_{tot}$ CSI-RS antenna ports according to the index numbers of the $P_{tot}$ CSI-RS antenna ports includes: sorting the index numbers of the $P_{tot}$ CSI-RS antenna ports; and selecting the P CSI-RS antenna ports with consecutive index numbers from the $P_{tot}$ CSI-RS antenna ports according to a sorting result; where the P CSI-RS antenna ports are sorted in ascending order of the index numbers, beams in a first polarization direction are sent to the terminal side through first P/2 CSI-RS antenna ports sorted by the index numbers, and beams in a second polarization direction are sent to the terminal side through last P/2 CSI-RS antenna ports sorted by the index numbers.

Optionally, the configuring of the index numbers of the $P_{tot}$ CSI-RS antenna ports respectively based on the sorting result of the K CSI-RS resources includes: for each CSI-RS resource in the K CSI-RS resources, sequentially dividing the $P_k$ antenna ports in the each CSI-RS resource into a first antenna port group and a second antenna port group, where the first antenna port group and the second antenna port group respectively include $\frac{P_k}{2}$ antenna ports; and sequentially performing joint numbering on index numbers of the CSI-RS antenna ports of the first antenna port group and the second antenna port group in each CSI-RS resource based on the sorting result of the K CSI-RS resources, where an index number of each CSI-RS antenna port in the first antenna port group is before an index number of each CSI-RS antenna port in the second antenna port group; where the determining of the P CSI-RS antenna ports selected from the $P_{tot}$ CSI-RS antenna ports according to the index numbers of the $P_{tot}$ CSI-RS antenna ports includes: selecting P/2 CSI-RS antenna ports with consecutive index numbers from the first antenna port group; and selecting P/2 CSI-RS antenna ports with consecutive index numbers from the second antenna port group; where beams in a first polarization direction are sent to the terminal side through the P/2 CSI-RS antenna ports of the first antenna port group, and beams in a second polarization direction are sent to the terminal side through the P/2 CSI-RS antenna ports of the second antenna port group.

Optionally, the determining of the K CSI-RS resources configured for the terminal side includes: determining the K CSI-RS resources configured for the terminal side from CSI-RS resources in at least one configured CSI-RS resource set.

Optionally, the determining of the K CSI-RS resources configured for the terminal side from the CSI-RS resources in the at least one configured CSI-RS resource set includes: sorting the CSI-RS resources in the at least one CSI-RS resource set based on identification information of the CSI-RS resources in the at least one CSI-RS resource set; and determining the K CSI-RS resources configured for the terminal side based on the sorting.

Optionally, the determining of the K CSI-RS resources configured for the terminal side from the CSI-RS resources in the at least one configured CSI-RS resource set, includes: for the at least one CSI-RS resource set, dividing Ks CSI-RS resources in the CSI-RS resource set into M resource groups, where M≥2, and each of the resource groups includes at least one CSI-RS resource; and determining the K CSI-RS resources from the CSI-RS resources in the M resource groups.

Optionally, after dividing the Ks CSI-RS resources in the CSI-RS resource set into M resource groups, the method further includes: for each resource group of the M resource groups, selecting a first CSI-RS resource from the resource group, selecting a second CSI-RS resource from other resource groups except for the resource group, and combining the first CSI-RS resource and the second CSI-RS resource into a CSI-RS resource pair; where the determining of the K CSI-RS resources from the CSI-RS resources in the M resource groups includes: determining the K CSI-RS resources from CSI-RS resources in N CSI-RS resource pairs, where N is the quantity of resource pairs in the M resource groups.

Optionally, the determining of the K CSI-RS resources configured for the terminal side includes: determining the K CSI-RS resources configured for the terminal side according to information of the CSI-RS resources carried in a received signaling indication.

Optionally, at least one of following configuration parameters is the same: CSI-RS resource types, CSI-RS resource bandwidths, power offsets of physical downlink shared channel (PDSCH) resource elements (REs) relative to CSI-RS REs, power offsets of CSI-RS REs relative to secondary synchronization signal (SSS) REs, or, associated quasi co-located (QCL) resources and QCL types for periodic CSI-RSs, of the K CSI-RS resources.

In a second aspect, the disclosure provides a method for sending feedback information, including: sending feedback information to a network side after receiving the CSI-RS sent by a network side using any of the above enhanced CSI-RS transmission methods; where the feedback information is determined by: selecting P' CSI-RS antenna ports from the P CSI-RS antenna ports; and sending the feedback information of the P' CSI-RS antenna ports to the network side.

Optionally, the selecting of the P' CSI-RS antenna ports from the P CSI-RS antenna ports includes: selecting K' CSI-RS resources from the K CSI-RS resources; and selecting P' CSI-RS antenna ports from CSI-RS antenna ports in the K' CSI-RS resources.

Optionally, the sending of the feedback information of the P' CSI-RS antenna ports to the network side includes: sending the feedback information of the P' CSI-RS antenna ports to the network side in a bitmap manner; or sending the feedback information of the P' CSI-RS antenna ports to the network side in a combination number manner.

Optionally, before sending the feedback information of the P' CSI-RS antenna ports to the network side in the combination number manner, the method further includes: sorting the K' CSI-RS resources based on identification information of the K' CSI-RS resources, where the identification information includes at least one of IDs of the CSI-RS resources, a resource mapping position of the CSI-RS resources in a time domain, or a resource mapping position of the CSI-RS resources in a frequency domain; respectively configuring index numbers of $P_{tot}$' CSI-RS antenna ports in the K' CSI-RS resources based on a sorting result of the K' CSI-RS resources; and selecting the P' CSI-RS antenna ports from the $P_{tot}$' CSI-RS antenna ports.

In a third aspect, the disclosure provides a network device, including: a memory configured to store an executable instruction; and a processor configured to read and execute the executable instruction stored in the memory to: determine K CSI-RS resources configured for a terminal side, where the K CSI-RS resources include $P_{tot}$ CSI-RS antenna ports in total, where $P_{tot} = \sum_{k=1}^{K} P_k$, $P_k$ is the quantity of CSI-RS antenna ports in a $k^{th}$ CSI-RS resource, and k E [1, K]; and select P CSI-RS antenna ports from the $P_{tot}$ CSI-RS antenna ports; and send beam-formed CSI-RSs to the terminal side through the P CSI-RS antenna ports by using P different beams respectively, where P < $P_{tot}$, and P is the quantity of beams to be sent.

Optionally, when selecting P CSI-RS antenna ports from the $P_{tot}$ CSI-RS antenna ports, the processor is specifically configured to: determine the P CSI-RS antenna ports selected from the $P_{tot}$ CSI-RS antenna ports according to information of the CSI-RS antenna ports carried in a received signaling indication; or, sort the K CSI-RS resources based on identification information of the K CSI-RS resources, where the identification information includes at least one of IDs of the CSI-RS resources, a resource mapping position of the CSI-RS resources in a time domain, or a resource mapping position of the CSI-RS resources in a frequency domain; respectively configure index numbers of the $P_{tot}$ CSI-RS antenna ports based on a sorting result of the K CSI-RS resources; and determine the P CSI-RS antenna ports selected from the $P_{tot}$ CSI-RS antenna ports according to the index numbers of the $P_{tot}$ CSI-RS antenna ports.

Optionally, when configuring the index numbers of the $P_{tot}$ CSI-RS antenna ports respectively based on the sorting result of the K CSI-RS resources, the processor is specifically configured to: for each CSI-RS resource in the K CSI-RS resources, sequentially perform joint numbering on index numbers of the CSI-RS antenna ports in each CSI-RS resource based on the sorting result of the K CSI-RS resources; where when determining the P CSI-RS antenna ports selected from the $P_{tot}$ CSI-RS antenna ports according to the index numbers of the $P_{tot}$ CSI-RS antenna ports, the processor is specifically configured to: sort the index numbers of the $P_{tot}$ CSI-RS antenna ports; and select the P CSI-RS antenna ports with consecutive index numbers from the $P_{tot}$ CSI-RS antenna ports according to a sorting result; where the P CSI-RS antenna ports are sorted in ascending order of the index numbers, beams in a first polarization direction are sent to the terminal side through first P/2 CSI-RS antenna ports sorted by the index numbers, and beams in a second polarization direction are sent to the terminal side through last P/2 CSI-RS antenna ports sorted by the index numbers.

Optionally, when configuring the index numbers of the $P_{tot}$ CSI-RS antenna ports respectively based on the sorting result of the K CSI-RS resources, the processor is specifically configured to: for each CSI-RS resource in the K CSI-RS resources, sequentially divide the $P_k$ antenna ports in the each CSI-RS resource into a first antenna port group and a second antenna port group, where the first antenna port group and the second antenna port group respectively include $\frac{P_k}{2}$ antenna ports; and sequentially perform joint numbering on index numbers of the CSI-RS antenna ports of the first antenna port group and the second antenna port group in each CSI-RS resource based on the sorting result of the K CSI-RS resources, where an index number of each CSI-RS antenna port in the first antenna port group is before an index number of each CSI-RS antenna port in the second antenna port group; where when determining the P CSI-RS antenna ports selected from the $P_{tot}$ CSI-RS antenna ports according to the index numbers of the $P_{tot}$ CSI-RS antenna ports, the processor is specifically configured to: select P/2 CSI-RS antenna ports with consecutive index numbers from the first antenna port group; and select P/2 CSI-RS antenna ports with consecutive index numbers from the second antenna port group; where beams in a first polarization direction are sent to the terminal side through the P/2 CSI-RS antenna ports of the first antenna port group, and beams in a second polarization direction are sent to the terminal side through the P/2 CSI-RS antenna ports of the second antenna port group.

Optionally, when determining the K CSI-RS resources configured for the terminal side, the processor is specifically configured to: determine the K CSI-RS resources configured for the terminal side from CSI-RS resources in at least one configured CSI-RS resource set.

Optionally, when determining the K CSI-RS resources configured for the terminal side from the CSI-RS resources in the at least one configured CSI-RS resource set, the processor is specifically configured to: sort the CSI-RS resources in the at least one CSI-RS resource set based on identification information of the CSI-RS resources in the at least one CSI-RS resource set; and determine the K CSI-RS resources configured for the terminal side based on sorting.

Optionally, when determining the K CSI-RS resources configured for the terminal side from the CSI-RS resources in the at least one configured CSI-RS resource set, the processor is specifically configured to: for the at least one CSI-RS resource set, divide Ks CSI-RS resources in the CSI-RS resource set into M resource groups, where M≥2, and each of the resource groups includes at least one CSI-RS resource; and determine the K CSI-RS resources configured for the terminal side from the CSI-RS resources in the M resource groups.

Optionally, after dividing the Ks CSI-RS resources in the CSI-RS resource set into M resource groups, the processor is further configured to: for each resource group of the M resource groups, select a first CSI-RS resource from the resource group, select a second CSI-RS resource from other resource groups except for the resource group, and combine the first CSI-RS resource and the second CSI-RS resource into a CSI-RS resource pair; where when determining the K CSI-RS resources from the CSI-RS resources in the M resource groups, the processor is specifically configured to: determine the K CSI-RS resources from CSI-RS resources in N CSI-RS resource pairs, where N is the quantity of resource pairs in the M resource groups.

Optionally, when determining the K CSI-RS resources configured for the terminal side, the processor is specifically configured to: determine the K CSI-RS resources configured for the terminal side according to information of the CSI-RS resources carried in a received signaling indication.

Optionally, at least one of following configuration parameters is the same: CSI-RS resource types, CSI-RS resource bandwidths, power offsets of PDSCH REs relative to CSI-RS REs, power offsets of CSI-RS REs relative to SSS REs, or associated QCL resources and QCL types for periodic CSI-RSs, of the K CSI-RS resources.

In a fourth aspect, the disclosure also provides a computer device, including: a memory configured to store an executable instruction; and a processor configured to read and execute the executable instruction stored in the memory to: send feedback information to a network side after receiving the CSI-RS sent by the network side using any of the above enhanced CSI-RS transmission methods, where the feedback information is determined by: select P' CSI-RS antenna ports from the P CSI-RS antenna ports; and send the feedback information of the P' CSI-RS antenna ports to the network side.

Optionally, when selecting P' CSI-RS antenna ports from the P CSI-RS antenna ports, the processor is specifically configured to: select K' CSI-RS resources from the K CSI-RS resources; and select the P' CSI-RS antenna ports from CSI-RS antenna ports in the K' CSI-RS resources.

Optionally, when sending the feedback information of the P' CSI-RS antenna ports to the network side, the processor is specifically configured to: send the feedback information of the P' CSI-RS antenna ports to the network side in a bitmap manner; or send the feedback information of the P' CSI-RS antenna ports to the network side in a combination number manner.

Optionally, before sending the feedback information of the P' CSI-RS antenna ports to the network side in the combination number manner, the processor is further configured to: sort the K' CSI-RS resources based on identification information of the K' CSI-RS resources, where the identification information includes at least one of IDs of the CSI-RS resources, a resource mapping position of the CSI-RS resources in a time domain, or a resource mapping position of the CSI-RS resources in a frequency domain; respectively configure index numbers of $P_{tot}$' CSI-RS antenna ports in the K' CSI-RS resources based on a sorting result of the K' CSI-RS resources; and select the P' CSI-RS antenna ports from the $P_{tot}$' CSI-RS antenna ports.

In a fifth aspect, the disclosure provides an enhanced CSI-RS transmission apparatus, including: a determining unit, configured to determine K CSI-RS resources configured for a terminal side, where the K CSI-RS resources include $P_{tot}$ CSI-RS antenna ports in total, where $P_{tot} = \sum_{k=1}^{K} P_k$ , $P_k$ is the quantity of CSI-RS antenna ports in a $k^{th}$ CSI-RS resource, and k E [1, K]; and a sending unit, configured to select P CSI-RS antenna ports from the $P_{tot}$ CSI-RS antenna ports; and send beam-formed CSI-RSs to the terminal side through the P CSI-RS antenna ports by using P different beams respectively, where $P < P_{tot}$, and P is the quantity of beams to be sent.

In a sixth aspect, the disclosure provides an apparatus for sending feedback information, including: a feedback unit, configured to send feedback information to a network side after receiving the CSI-RS sent by the network side using any of the above enhanced CSI-RS transmission methods; where the feedback information is determined by: selecting P' CSI-RS antenna ports from the P CSI-RS antenna ports; and sending the feedback information of the P' CSI-RS antenna ports to the network side.

In a seventh aspect, the disclosure provides a computer-readable storage medium, where instructions in the computer-readable storage medium, when executed by a processor, cause the processor to execute any of the above methods in the first aspect or any of the above methods in the second aspect.

In the disclosure, when the quantity P of beams to be sent is less than the total quantity $P_{tot}$ of configured CSI-RS antenna ports, the network side may select part of CSI-RS antenna ports for sending the beam-formed CSI-RSs to the terminal side from the $P_{tot}$ configured CSI-RS antenna ports, so that compared with the solution that the network side needs to send the beam-formed CSI-RS based on each configured CSI-RS antenna port in the related art, in the present disclosure the sending power on the network side can be effectively reduced, and the feedback overhead on the terminal side can also be effectively reduced at the same time.

**Brief Description of Figures**

Fig. 1 is a schematic diagram of configuring index numbers of CSI-RS antenna ports in embodiments of the disclosure.
Fig. 2 is another schematic diagram of configuring index numbers of CSI-RS antenna ports in embodiments of the disclosure.
Fig. 3 is a schematic flowchart of enhanced CSI-RS transmission performed on a network side in embodiments of the disclosure.
Fig. 4 is a schematic diagram of configuring a CSI-RS resource pair in embodiments of the disclosure.
Fig. 5 is a schematic flowchart of sending feedback information on a terminal side in embodiments of the disclosure.
Fig. 6 is a schematic diagram of an entity architecture of a network device in embodiments of the disclosure.
Fig. 7 is a schematic diagram of a logical architecture of a network device in embodiments of the disclosure.
Fig. 8 is a schematic diagram of an entity architecture of a computer device according to embodiments of the disclosure.
Fig. 9 is a schematic diagram of a logical architecture of a computer device according to embodiments of the disclosure.

**Detailed Description**

In order to solve the problem of the high sending power on the network side and the high feedback overhead on the terminal side when the quantity of beams to be sent is less than the total quantity of configured CSI-RS antenna ports, in the embodiments of the disclosure, the network side may select part of CSI-RS antenna ports for sending the beam-formed CSI-RSs to the terminal side from the configured CSI-RS antenna ports when the quantity of beams is less than the total quantity of configured CSI-RS antenna ports, thereby reducing the sending power on the network side and the feedback overhead on the terminal side.

The preferred embodiments of the present disclosure will be further described in detail below with reference to the accompanying drawings.

In the embodiments of the present disclosure, the network side may first determine K CSI-RS resources configured by the network side for the terminal side, where K CSI-RS resources include $P_{tot}$ CSI-RS antenna ports in total, the $k^{th}$ CSI-RS resource includes $P_k$ CSI-RS antenna ports, and then $P_{tot} = \sum_{k=1}^{K} P_k$ ; where $P_k$ is the quantity of CSI-RS antenna ports included in the $k^{th}$ CSI-RS resource, and k E [1, K].

For example, the network side configures the corresponding quantity of CSI-RS antenna ports for each CSI-RS resource, as follows: the first CSI-RS resource is configured with 2 CSI-RS antenna ports, and then $P_1$=2; the second CSI-RS resource is configured with 1 CSI-RS antenna port, and then $P_2$=1; ... the $k^{th}$ CSI-RS resource is configured with 6 CSI-RS antenna ports, and then $P_k$=6, k E [1, K]; ... the $K^{th}$ CSI-RS resource is configured with 4 CSI-RS antenna ports, and then $P_K$=4.

Where, k represents a serial number of the CSI-RS resource, which can represent any CSI-RS resource; and K represents the quantity of CSI-RS resources.

On the other hand, in the process that the network side configures K CSI-RS resources for the terminal side, optionally, the identification information of K CSI-RS resources needs to be sorted in ascending or descending order. The identification information of the CSI-RS resource may include at least one of IDs of the CSI-RS resources, a resource mapping position of the CSI-RS resources in the time domain, or a resource mapping position of the CSI-RS resources in the frequency domain. Then, the network side may configure index numbers of $P_{tot}$ CSI-RS antenna ports respectively based on a sorting result of K CSI-RS resources.

In the specific implementation, the network side configures the identification information of K CSI-RS resources for the terminal side, and after K CSI-RS resources are sorted in ascending or descending order based on the identification information of K CSI-RS resources, the quantities of CSI-RS antenna ports corresponding to the K configured CSI-RS resources are respectively denoted as $P_1$, $P_2$, ..., $P_k$, ..., $P_K$. When the network side respectively configures the index numbers of the $P_{tot}$ CSI-RS antenna ports based on the sorting result of K CSI-RS resources, the following two joint numbering modes may be adopted.

The first joint numbering mode: for each CSI-RS resource in K CSI-RS resources, the network side may sequentially perform joint numbering on the index numbers of the CSI-RS antenna ports included in each CSI-RS resource based on the sorting result of K CSI-RS resources. Specifically, the network side may set the index numbers of the CSI-RS antenna ports as: n, n+1, ..., n+$P_1$-1, n+$P_1$, ..., n+$P_1$+$P_2$-1, ..., n+$P_1$+$P_2$+...+$P_K$-1. The index numbers of the first CSI-RS antenna ports are n, n+1,...,n+$P_1$-1; and the index numbers of the second CSI-RS antenna ports are n+$P_1$, ..., n+$P_1$+$P_2$-1; and so on, and details are not repeated here. Where n represents an start value of the port index number of the first CSI-RS resource.

Exemplarily, when the network side sets the index numbers of the CSI-RS antenna ports included in K CSI-RS resources, the network side may respectively set them based on the identification information of K CSI-RS resources in ascending order, and the obtained index numbers of CSI-RS antenna ports may also be sorted in ascending order.

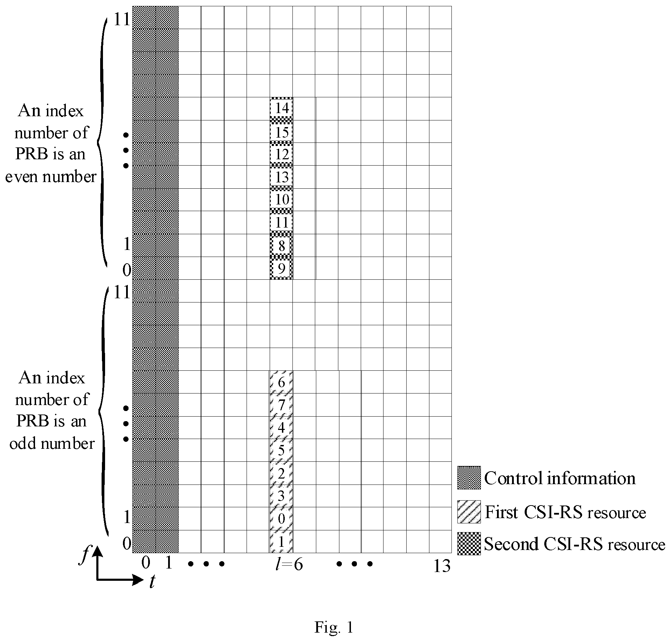

For example, referring to Fig. 1, assuming that IDs of two CSI-RS resources are 1000 and 1001 respectively, the CSI-RS resource with ID 1000 may be used as the first CSI-RS resource (CSI-RS resource 0), and the CSI-RS resource with ID 1001 may be used as the second CSI-RS resource (CSI-RS resource 1). The two CSI-RS resources include the same quantity of CSI-RS antenna ports, e.g., each include 8 CSI-RS antenna ports, that is, $P_1$=$P_2$=8, and then the total quantity of CSI-RS antenna ports included in K CSI-RS resources is

$$P_{tot} = \sum_k P_k = 16.$$

When configuring the index numbers of the 16 CSI-RS antenna ports, the index numbers of 8 CSI-RS antenna ports included in the CSI-RS resource 0 are configured as 0, 1, 2..., 7, respectively; and the index numbers of 8 CSI-RS antenna ports included in the CSI-RS resource 1 are configured as 8, 9, 10..., 15, respectively.

The second joint numbering mode: for each CSI-RS resource in K CSI-RS resources, the network side sequentially divides $P_k$ antenna ports included in the CSI-RS resource into a first antenna port group and a second antenna port group. The first antenna port group and the second antenna port group respectively include $\frac{P_k}{2}$ antenna ports. Then the network side, based on the sorting result of K CSI-RS resources, sequentially performs joint numbering on the index numbers of the CSI-RS antenna ports of the first antenna port group and the second antenna port group in each CSI-RS resource, that is, the index numbers of the CSI-RS antenna ports of the first antenna port group in each CSI-RS resource is jointly numbered firstly, and then the index numbers of the CSI-RS antenna ports of the second antenna port group in each CSI-RS resource are jointly numbered. Where the index numbers of the CSI-RS antenna ports in each first antenna port group is before the index numbers of the CSI-RS antenna ports in each second antenna port group.

Specifically, the network side may firstly perform joint numbering on the CSI-RS antenna ports of the first antenna port group (the first $\frac{P_k}{2}$) of each CSI-RS resource, and then use the last index number after the joint numbering is performed as a starting point to perform joint numbering on the CSI-RS antenna ports of the second antenna port group (the last $\frac{P_k}{2}$) of each CSI-RS resource. Taking K=2 as an example, the port index numbers of the two resources are respectively $n, ..., n + \frac{P_1}{2} - 1, n + \frac{P_1}{2}, ..., n + \frac{P_1}{2} + \frac{P_2}{2} - 1, n + \frac{P_1}{2} + \frac{P_2}{2}, ..., n + P_1 + P_2 - 1$. The index numbers of the CSI-RS antenna ports of the first antenna port group (the first $\frac{P_k}{2}$) of the first CSI-RS antenna port are respectively $n, ..., n + \frac{P_1}{2} - 1$. The index numbers of the CSI-RS antenna ports of the first antenna port group (the first $\frac{P_k}{2}$) of the second CSI-RS antenna port are respectively $n + \frac{P_1}{2}, ..., n + \frac{P_1}{2} + \frac{P_2}{2} - 1$. The index numbers of the CSI-RS antenna ports of the second antenna port group (the last $\frac{P_k}{2}$) of the first CSI-RS antenna port are respectively $n + \frac{P_1}{2} + \frac{P_2}{2}, ..., n + P_1 + \frac{P_2}{2} - 1$. The index numbers of the CSI-RS antenna ports of the second antenna port group (the last $\frac{P_k}{2}$) of the second CSI-RS antenna port are respectively $n + P_1 + \frac{P_2}{2}, ..., n + P_1 + P_2 - 1$. Where n represents a start value of the port index of the first CSI-RS resource. When K is greater than 2, and the index numbers of $P_{tot}$ CSI-RS antenna ports are configured by deducing according to the above mode, and details are not repeated here.

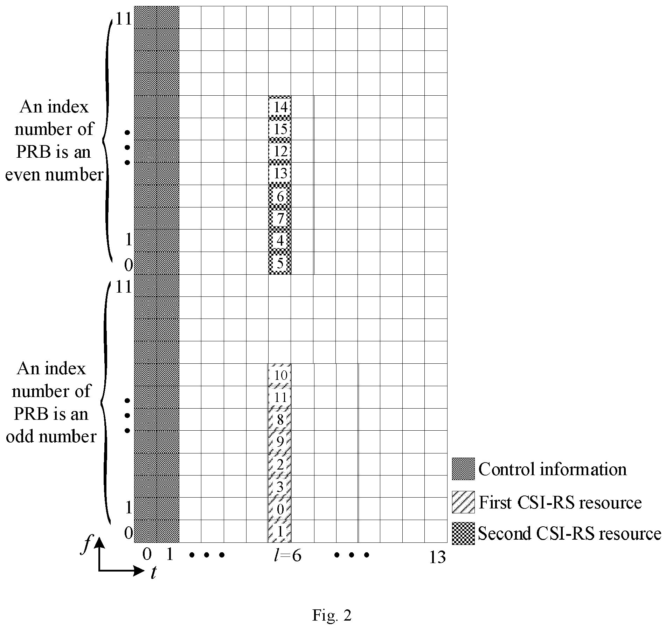

For ease of understanding, referring to Fig. 2, assuming that IDs of two CSI-RS resources are 1000 and 1001 respectively, the CSI-RS resource with ID 1000 may be used as the first CSI-RS resource (CSI-RS resource 0), and the CSI-RS resource with ID 1001 may be used as the second CSI-RS resource (CSI-RS resource 1). The two CSI-RS resources include the same quantity of CSI-RS antenna ports, e.g., each include 8 CSI-RS antenna ports, that is, $P_1=P_2=8$, and then the total quantity of CSI-RS antenna ports included in K CSI-RS resources is

$$P_{tot} = \sum_k P_k = 16.$$

When configuring the index numbers of the 16 CSI-RS antenna ports, the index numbers of the first four CSI-RS antenna ports included in the CSI-RS resource 0 may be configured as 0, 1, 2, and 3, respectively; the index numbers of the first four CSI-RS antenna ports included in the CSI-RS resource 1 are configured as 4, 5, 6, and 7, respectively; the index numbers of the last four CSI-RS antenna ports included in the CSI-RS resource 0 are configured as 8, 9, 10, and 11, respectively; and the index numbers of the last four CSI-RS antenna ports included in the CSI-RS resource 1 are configured as 12, 13, 14, and 15, respectively.

Optionally, the CSI-RS antenna ports of the first antenna port groups, such as the CSI-RS antenna ports of which the index numbers are $n, ..., n + \frac{P_1}{2} - 1, n + \frac{P_1}{2}, ..., n + \frac{P_1}{2} + \frac{P_2}{2} - 1$ in the foregoing embodiments, may be used to send beams in a first polarization direction; and the CSI-RS antenna ports of the second antenna port groups, such as the CSI-RS antenna ports of which the index numbers are $n + \frac{P_1}{2} + \frac{P_2}{2}, ..., n + P_1 + P_2 - 1$ in the foregoing embodiments, may be used to send beams in a second polarization direction.

The index numbers of CSI-RS antenna ports are configured in the above modes, so that the network side can accurately obtain each CSI-RS antenna port selected by the terminal side based on the port indication information selected and fed back by the terminal side, so as to avoid that the network side and the terminal side have different ways of identifying the port indication information of the CSI-RS antenna ports, thereby avoiding errors when the network side uses CSI-RS antenna ports and port combination coefficient selected by the terminal side.

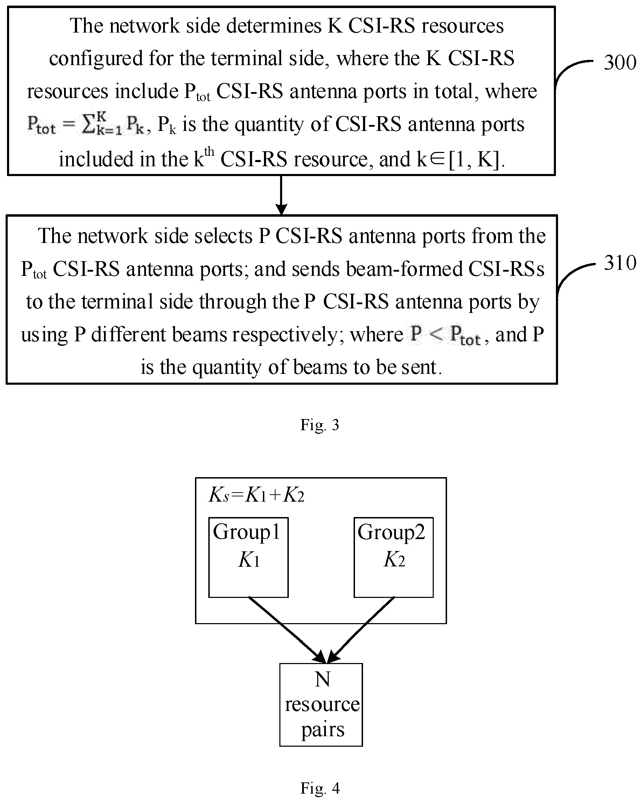

Based on the above resource configuration, in the embodiments of the present disclosure, referring to Fig. 3, the specific process of performing enhanced CSI-RS transmission on the network side is as follows.

Step 300: the network side determines K CSI-RS resources configured for the terminal side, where the K CSI-RS resources include $P_{tot}$ CSI-RS antenna ports in total, where $P_{tot} = \sum_{k=1}^{K} P_k$, $P_k$ is the quantity of CSI-RS antenna ports included in the $k^{th}$ CSI-RS resource, and k E [1, K].

The specific configuration mode for configuring the CSI-RS resources for the terminal side by the network side has been introduced in the foregoing content, and will not be repeated here.

Step 310: the network side selects P quantity of CSI-RS antenna ports from the $P_{tot}$ CSI-RS antenna ports; and sends beam-formed CSI-RSs to the terminal side through the P CSI-RS antenna ports by using P different beams respectively; where $P < P_{tot}$, and P is the quantity of beams to be sent.

In a possible implementation, when step 310 is performed, the selecting of P CSI-RS antenna ports from the $P_{tot}$ CSI-RS antenna ports includes: determining the P CSI-RS antenna ports selected from the $P_{tot}$ CSI-RS antenna ports according to information of CSI-RS antenna ports carried in the received signaling indication; or, sorting the K CSI-RS resources based on the identification information of the K CSI-RS resources, where the identification information includes at least one of IDs of the CSI-RS resources, a resource mapping position of the CSI-RS resources in the time domain, or a resource mapping position of the CSI-RS resources in the frequency domain; respectively configuring the index numbers of the $P_{tot}$ CSI-RS antenna ports based on the sorting result of the K CSI-RS resources; and determining the P CSI-RS antenna ports selected from the $P_{tot}$ CSI-RS antenna ports according to the index numbers of the $P_{tot}$ CSI-RS antenna ports.

Optionally, the user may set information of the selected P CSI-RS antenna ports based on at least of the radio resource control (RRC) signaling, medium access control-control element (MAC-CE) signaling, and downlink control information (DCI) signaling; and the terminal side may determine, according to the information of the P CSI-RS antenna ports carried in the received signaling indication, which P CSI-RS antenna ports for sending the beam-formed CSI-RSs to the terminal side are selected from the $P_{tot}$ CSI-RS antenna ports.

Optionally, the network side may also determine, according to the index numbers of the $P_{tot}$ CSI-RS antenna ports, which P CSI-RS antenna ports for sending the beam-formed CSI-RSs to the terminal side are selected from the $P_{tot}$ CSI-RS antenna ports. The specific configuration mode of configuring the index numbers of the $P_{tot}$ CSI-RS antenna ports by the network side has been introduced in the foregoing content, and will not be repeated here.

Specifically, when the network side configures the index numbers of the $P_{tot}$ CSI-RS antenna ports in the first joint numbering mode, the network side may sequentially select P CSI-RS antenna ports with consecutive index numbers from the $P_{tot}$ CSI-RS antenna ports in ascending or descending order of the index numbers. Optionally, when sending the beam-formed CSI-RSs to the terminal side through the P CSI-RS antenna ports respectively, the network side may sort the P CSI-RS antenna ports in ascending order of the index numbers, and send beams in the first polarization direction to the terminal side through the first P/2 CSI-RS antenna ports sorted by the index numbers and send beams in the second polarization direction to the terminal side through the last P/2 CSI-RS antenna ports sorted by the index numbers.

Exemplarily, referring to Fig. 1 again, if P=12, 12 CSI-RS antenna ports with index numbers of 0, 1, 2, ..., 11 may be used as the selected 12 CSI-RS antenna ports. The beams in the first polarization direction is sent to the terminal side through 6 CSI-RS antenna ports with index numbers of 0, 1, ..., 5, and the beams in the second polarization direction is sent to the terminal side through other 6 CSI-RS antenna ports with index numbers of 6, 7, ..., 11.

In addition, in Fig. 1, the vertical axis of f represents the frequency domain of the CSI-RS resource, and the horizontal axis of t represents the time domain of the CSI-RS resource. Optionally, for example, the first CSI-RS resource (CSI-RS resource 0) is configured in a physical resource block (PRB) whose index number is an odd number, and the second CSI-RS resource (CSI-RS resource 1) is configured in a PRB whose index number is an even number. Optionally, the user may, based on the RRC signaling, set parameter information of a starting resource block (starting RB) in the frequency domain of the CSI-RS resource and determine the order of all configured CSI-RS resources.

Specifically, when the network side configures the index numbers of $P_{tot}$ CSI-RS antenna ports in the second joint numbering mode, and determines the P CSI-RS antenna ports selected from the $P_{tot}$ CSI-RS antenna ports according to the index numbers of the $P_{tot}$ CSI-RS antenna ports, the network side may select P/2 CSI-RS antenna ports with consecutive index numbers from the first antenna port group, and select P/2 CSI-RS antenna ports with consecutive index numbers from the second antenna port group. Optionally, the beams in the first polarization direction may be sent to the terminal side through P/2 CSI-RS antenna ports of the first antenna port group, and the beams in the second polarization direction may be sent to the terminal side through P/2 CSI-RS antenna ports of the second antenna port group.

Exemplarily, referring to Fig. 2 again, if P=12, the beams in the first polarization direction may be sent to the terminal side through four CSI-RS antenna ports with index numbers of 0, 1, 2, 3 respectively in the CSI-RS resource 0 and two CSI-RS antenna ports with index numbers of 4, 5 respectively in the CSI-RS resource 1; and the beams in the second polarization direction may be sent to the terminal side through four additional CSI-RS antenna ports with index numbers of 8, 9, 10, 11 respectively in the CSI-RS resource 0 and two additional CSI-RS antenna ports with index numbers of 12, 13 respectively in the CSI-RS resource 1.

In a possible implementation, when step S300 is performed, the determining K CSI-RS resources configured for the terminal side includes: determining the K CSI-RS resources configured for the terminal side from CSI-RS resources included in at least one configured CSI-RS resource set.

Optionally, the user may set information of the selected K CSI-RS resources based on at least one of the RRC signaling, MAC-CE signaling, or DCI signaling; and the terminal side may determine, according to information of K CSI-RS resources carried in the received signaling instruction, which K CSI-RS resources are selected, as the K CSI-RS resources configured by the network side for the terminal side, from CSI-RS resources included in the at least one configured CSI-RS resource set.

Optionally, the K CSI-RS resources configured for the terminal side is further determined from CSI-RS resources included in the at least one configured CSI-RS resource set by: sorting the CSI-RS resources included in the at least one CSI-RS resource set based on identification information of the CSI-RS resources included in the at least one CSI-RS resource set; and determining the K CSI-RS resources configured for the terminal side based on the sorting.

Specifically, the network side may sort the CSI-RS resources included in the at least one CSI-RS resource set in ascending or descending order based on the identification information of CSI-RS resources included in the at least one CSI-RS resource set; and determine K CSI-RS resources with continuous identification information as the K CSI-RS resources configured for the terminal side based on the sorting result.

Optionally, the K CSI-RS resources configured for the terminal side is further determined from CSI-RS resources included in the at least one configured CSI-RS resource set by: for the at least one CSI-RS resource set, dividing Ks CSI-RS resources included in the CSI-RS resource set into M resource groups, where M≥2, and each of the resource groups includes at least one CSI-RS resource; and determining the K CSI-RS resources from the CSI-RS resources included in the M resource groups.

Optionally, the user may set information of the selected resource groups based on at least one of RRC signaling, MAC-CE signaling, or DCI signaling; and the terminal side may determine which resource group or which resource groups are selected from the M resource groups based on the information of the resource groups carried in the received signaling indication, and further determine the K CSI-RS resources configured for the terminal side from the CSI-RS resources included in the selected resource groups.

In a possible implementation, after the Ks CSI-RS resources included in the CSI-RS resource set are divided into M resource groups, the method further includes: for each resource group in the M resource groups, selecting one first CSI-RS resource from a resource group and one second CSI-RS resource from other resource groups except for the resource group; and combining the first CSI-RS resource and the second CSI-RS resource into a CSI-RS resource pair; where the determining of the K CSI-RS resources from the CSI-RS resources included in the M resource groups includes: determining the K CSI-RS resources from CSI-RS resources included in the N CSI-RS resource pairs, where N is the quantity of resource pairs included in the M resource groups.

Optionally, the user may set information of the selected resource pair based on at least one of RRC signaling, MAC-CE signaling, or DCI signaling; and the terminal side may determine which resource pair or which resource pairs are selected from the N resource pairs based on the information of the resource pairs carried in the received signaling indication, and further determine the K CSI-RS resources configured for the terminal side from the CSI-RS resources included in the selected resource pairs.

For the convenience of understanding, the above embodiments are further described in detail below through a specific application scenario.

It is assumed that the network side configures one CSI-RS resource set for the terminal side, and the resource set includes two CSI-RS resources, where K=2. The two CSI-RS resources are denoted as $P_1$ and $P_2$ respectively, and the quantity of CSI-RS antenna ports included in the two CSI-RS resources respectively may be the same or different. For example, it is assumed that the two CSI-RS resources each include 8 CSI-RS antenna ports, that is, $P_1=P_2=8$, then the total quantity of antenna ports included in the K CSI-RS resources is

$$P_{tot} = \sum_k P_k = 16.$$

Optionally, resource densities of the two CSI-RS resources may be the same or different, which is not specifically limited in this disclosure. Exemplarily, the resource densities of the two CSI-RS resources may be 0.5 RE/RB/Port.

Optionally, at least one of the following configuration parameters of the K CSI-RS resources is the same: CSI-RS resource types, CSI-RS resource bandwidths, power offsets of physical downlink shared channel (PDSCH) resource elements (REs) relative to CSI-RS REs, power offsets of the CSI-RS REs relative to secondary synchronization signal (SSS) REs, or, associated quasi co-located (QCL) resources and QCL types for periodic CSI-RSs. Exemplarily, at least one of the following configuration parameters of the two CSI-RS resources is the same: CSI-RS resource types, such as periodic CSI-RSs, semi-persistent CSI-RSs, aperiodic CSI-RS (A CSI-RS) or the like, CSI-RS resource bandwidths power offsets of PDSCH REs relative to CSI-RS REs, power offsets of CSI-RS REs relative to SSS REs, or the associated QCL resources and QCL types for periodic CSI-RSs, etc.

Optionally, still taking K=2 as an example, it is assumed that the network side configures one CSI-RS resource set for the terminal side, the resource set includes 6 CSI-RS resources, that is, Ks=6, and Ks CSI-RS resources are divided into two groups, that is, M=2. The K CSI-RS resources may be determined from CSI-RS resources included in a first resource group in the two resource groups in a predefined manner, etc.

Optionally, still taking K=2 as an example, it is assumed that the network side configures one CSI-RS resource set for the terminal side, the resource set includes 6 CSI-RS resources, that is, Ks=6, and Ks CSI-RS resources are divided into two groups (Group 1 and Group 2), that is, M=2. Referring to Fig. 4, Group 1 includes $K_1$ CSI-RS resources, and Group 2 includes $K_2$ CSI-RS resources, that is, $K_S=K_1+K_2$. The CSI-RS resources in the two resource groups may be combined into three CSI-RS resource pairs, that is, N=3. Exemplarily, the user may set information of the second CSI-RS resource pair selected in the three resource pairs based on at least one of RRC signaling, MAC-CE signaling, or DCI signaling; and the terminal side may determine the K CSI-RS resources from the CSI-RS resources included in the second CSI-RS resource pair according to the information of the resource pair carried in the received signaling indication.

To sum up, based on the above operation, when the quantity P of beams to be sent is less than the total quantity $P_{tot}$ of configured CSI-RS antenna ports, the network side may select part of CSI-RS antenna ports for sending the beam-formed CSI-RSs to the terminal side from the $P_{tot}$ configured CSI-RS antenna ports, which can effectively reduce the sending power on the network side, and can also effectively reduce the feedback overhead on the terminal side at the same time, compared with the solution that the network side needs to send the beam-formed CSI-RS based on each configured CSI-RS antenna port in the related art.

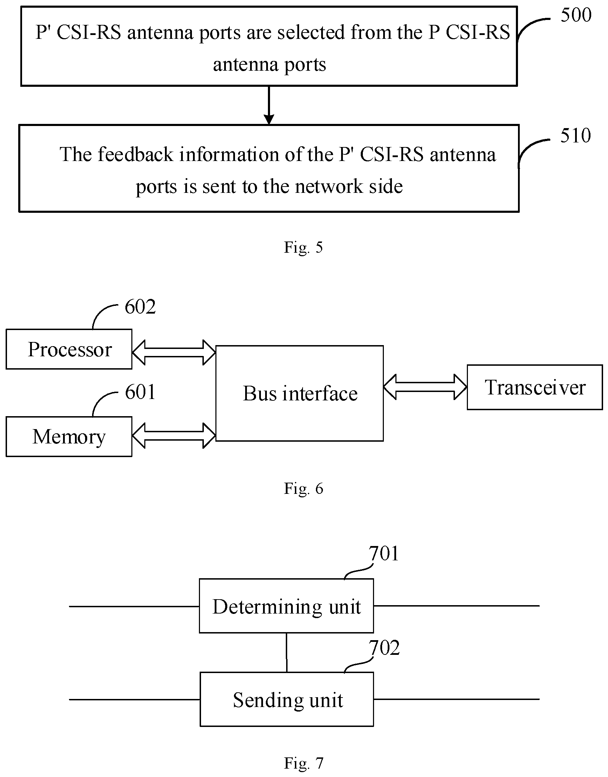

In a possible implementation, the terminal side may send feedback information to the network side after receiving the CSI-RSs sent by the network side in the above mode. The present disclosure provides a method for sending feedback information, as shown in Fig. 5, and the specific process that the terminal side sends feedback information is as follows.

Step 500: P' CSI-RS antenna ports are selected from the P CSI-RS antenna ports.

Exemplarily, the network side may randomly select P' CSI-RS antenna ports from the P CSI-RS antenna ports.

Step 510: the feedback information of the P' CSI-RS antenna ports is sent to the network side.

Optionally, when step 500 is performed, the selecting of P' CSI-RS antenna ports from the P CSI-RS antenna ports includes: selecting K' CSI-RS resources from the K CSI-RS resources; and selecting P' CSI-RS antenna ports from the CSI-RS antenna ports included in the K' CSI-RS resources.

Optionally, when step 510 is executed, the sending of the feedback information of the P' CSI-RS antenna ports to the network side includes: sending the feedback information of the P' CSI-RS antenna ports to the network side in a bitmap manner; or, sending the feedback information of the P' CSI-RS antenna ports to the network side in a combination number manner.

Specifically, the terminal side may use a bitmap with a size P' to send the feedback information of the P' CSI-RS antenna ports to the network side.

In a possible implementation, since the feedback overhead on the terminal side when sending the feedback information to the network side by using the combination number manner is relatively smaller than the feedback overhead on the terminal side when sending the feedback information to the network side by using the bitmap manner, the terminal side may use the combination number manner to send the feedback information of the P' CSI-RS antenna ports to the network side.

Optionally, in order to reduce the feedback overhead on the terminal side, before sending the feedback information of the P' CSI-RS antenna ports to the network side in a combination number manner, the method further includes: sorting the K' CSI-RS resources based on the identification information of the K' CSI-RS resources, where the identification information includes at least one of the IDs of the CSI-RS resources, a resource mapping position of the CSI-RS resources in the time domain, or a resource mapping position of the CSI-RS resources in the frequency domain; and based on the sorting result of the K' CSI-RS resources, respectively configuring the index numbers of $P_{tot}$' CSI-RS antenna ports included in the K' CSI-RS resources; and selecting P' CSI-RS antenna ports from the $P_{tot}$' CSI-RS antenna ports.

Where, when the terminal side respectively configures the index numbers of the $P_{tot}$' CSI-RS antenna ports included in the K' CSI-RS resources based on the sorting result of the K' CSI-RS resources, the two joint numbering modes in the above embodiments may also be used. For example, the first joint numbering mode may be used to configure the index number. Specifically, for each CSI-RS resource in the K' CSI-RS resources, the terminal side may sequentially perform joint numbering on the index numbers of the CSI-RS antenna ports included in each CSI-RS resource based on the sorting result of the K' CSI-RS resources, which will not be repeated here.

The terminal side may also configure the index number by the second joint numbering mode. Specifically, for each CSI-RS resource in the K' CSI-RS resources, the terminal side divides the $P_k$' antenna ports included in the CSI-RS resource into a first antenna port group and a second antenna port group. The first antenna port group and the second antenna port group each include $P_k$'/2 antenna ports. Then the terminal side sequentially performs joint numbering on the index numbers of the CSI-RS antenna ports of the first antenna port group and the second antenna port group in each CSI-RS resource based on the sorting result of the K' CSI-RS resources. The index number of each CSI-RS antenna port in the first antenna port group is before the index number of each CSI-RS antenna port in the second antenna port group, and details are not repeated here.

The terminal side may select P' CSI-RS antenna ports from the $P_{tot}$' CSI-RS antenna ports, and send feedback information of the P' CSI-RS antenna ports to the network side in a combination number manner. Optionally, the terminal side may send the feedback information of the P' CSI-RS antenna ports to the network side in a combination number

manner of $\left\lceil \log_2 \binom{P_{tot}'}{p'} \right\rceil$ or $\left\lceil \log_2 \binom{P_{tot}'/2}{p'/2} \right\rceil$ bits.

Where ( $\binom{A}{B}$ ) represents a combination operation, that is, selecting all possible combinations with the quantity B from A; and ⌈ ⌉ represents a round-up operation.

In a possible implementation, the terminal side and the network side may reconfigure the index numbers of the $P_{tot}$' CSI-RS antenna ports included in the K' CSI-RS resources, to further reduce the feedback overhead. However, in this way, even if the CSI-RS antenna port (the same one CSI-RS antenna port) is at the same port position, the index numbers of $P_{tot}$' CSI-RS antenna ports may be different from the index numbers of P CSI-RS antenna ports. In this case, when the network side receives the feedback information of the P' CSI-RS antenna ports sent by the terminal side, the network side may parse the CSI-RS resource indicator (CRI) information and the like, to determine which K' CSI-RS resources are selected by the terminal side and determine $P_{tot}$' CSI-RS antenna ports included in the K' CSI-RS resources. Then the network side may perform one-to-one mapping between the $P_{tot}$' CSI-RS antenna ports and the P CSI-RS antenna ports, and then determine CSI-RS antenna ports, matching with port positions of the P CSI-RS antenna ports, of the P' CSI-RS antenna ports selected by the terminal side. Specifically, the process that the network side performs one-to-one mapping between the $P_{tot}$' CSI-RS antenna ports and the P CSI-RS antenna ports may be: the network side determines the port numbers of the K' CSI-RS resources according to the selected K' CSI-RS resources indicated by the CRI; determines a first correspondence between the index numbers of the $P_{tot}$' CSI-RS antenna ports and the port numbers of the K' CSI-RS resources; and then determines the CSI-RS antenna ports matching the port positions of the P CSI-RS antenna ports according to the reported port indication information, the P' CSI-RS antenna ports selected by the terminal side and the first correspondence.

In the present disclosure, when the terminal side sends the feedback information of the P' CSI-RS antenna ports to the network side in a combination number manner, the terminal side may first perform joint numbering on the index numbers of the CSI-RS antenna ports included in the K' CSI-RS resources based on the sorting result of the K' CSI-RS resources; and the feedback overhead on the terminal side may be reduced in the present disclosure.

Specifically, in the related art, the terminal side sends feedback information to the network side by indicating the CSI-RS antenna ports selected for each CSI-RS resource through the combination number of $\left\lceil \log_2 \binom{P_k}{P''} \right\rceil$ bits, where $P_k$ represents the quantity of CSI-RS antenna ports of the $k^{th}$ CSI-RS resource, and P" represents the quantity of CSI-RS antenna ports selected by the terminal side from the $k^{th}$ CSI-RS resource. Since P" represents the quantity of CSI-RS antenna ports selected by the terminal side from the $k^{th}$ CSI-RS resource, and the indication of $\lceil \log_2(P_k) \rceil$ bits is further needed, then for the CSI-RS antenna ports of the $k^{th}$ CSI-RS resource, the feedback overhead on the

terminal side is: $\left\lceil \log_2 \binom{P_k}{P_k''} \right\rceil + \lceil \log_2(P_k) \rceil$ . Exemplary, assuming that $P_1 = P_2 = 8$, $P_1'' = 4$, $P_2'' = 8$, then the total feedback overhead on the terminal side is:

$$\Sigma_k \left( \left\lceil \log_2 \binom{P_k}{P_k''} \right\rceil + \lceil \log_2(P_k) \rceil \right) = 16 \text{ bits.}$$

Optionally, in the related art, since the network side configures P'=12 for the terminal side, if the CSI-RS resource of $P_1''=4$ has been reported through the CRI, the CSI-RS resource of $P_2''=8$ may not be reported through the CRI, and then the total feedback overhead on the terminal side may be: $\left\lceil \log_2 \binom{P_1}{P_1''} \right\rceil + \lceil \log_2(P_1) \rceil + \left\lceil \log_2 \binom{P_2}{P_2''} \right\rceil = 13$ bits.

However, if the combination number indication according to the present disclosure is adopted, similarly, in the case of $P_{tot}$'=16, P'=12 and K'=2, the terminal side selects P' CSI-RS antenna ports after joint numbering is performed on the two resources according to the present disclosure, and the feedback overhead when the terminal side sends the feedback information of the P' CSI-RS antenna ports to the network side is $\left\lceil \log_2 \binom{P_{tot}'}{P'} \right\rceil = 11$ bits. It can be seen that the feedback overhead of the terminal side in the related art is greater than the feedback overhead after joint numbering is performed in the present disclosure, and the present disclosure can reduce the feedback overhead on the terminal side.

Based on the same inventive concept, referring to Fig. 6, a network device (e.g., a base station) in embodiments of the present disclosure at least include: a memory 601 configured to store an executable instruction; and a processor 602 configured to read and execute the executable instruction stored in the memory 601 to: determine K CSI-RS resources configured for a terminal side, where the K CSI-RS resources include $P_{tot}$ CSI-RS antenna ports in total, where $P_{tot} = \sum_{k=1}^{K} P_k$ , $P_k$ is the quantity of CSI-RS antenna ports included in the $k^{th}$ CSI-RS resource, and $k \in [1, K]$; and select P CSI-RS antenna ports from the $P_{tot}$ CSI-RS antenna ports; and send beam-formed CSI-RSs to the terminal side through the P CSI-RS antenna ports by using P different beams respectively, where $P < P_{tot}$, and P is the quantity of beams to be sent.

Optionally, when selecting P CSI-RS antenna ports from the $P_{tot}$ CSI-RS antenna ports, the processor 602 is specifically configured to: determine the P CSI-RS antenna ports selected from the $P_{tot}$ CSI-RS antenna ports according to information of the CSI-RS antenna ports carried in a received signaling indication; or, sort the K CSI-RS resources based on identification information of the K CSI-RS resources, where the identification information includes at least one of IDs of the CSI-RS resources, a resource mapping position of the CSI-RS resources in a time domain, or a resource mapping position of the CSI-RS resources in a frequency domain; respectively configure index numbers of the $P_{tot}$ CSI-RS antenna ports based on a sorting result of the K CSI-RS resources; and determine the P CSI-RS antenna ports selected from the $P_{tot}$ CSI-RS antenna ports according to the index numbers of the $P_{tot}$ CSI-RS antenna ports.

Optionally, when configuring the index numbers of the $P_{tot}$ CSI-RS antenna ports respectively based on the sorting result of the K CSI-RS resources, the processor 602 is specifically configured to: for each CSI-RS resource in the K CSI-RS resources, sequentially perform joint numbering on index numbers of the CSI-RS antenna ports included in each CSI-RS resource based on the sorting result of the K CSI-RS resources; where when determining the P CSI-RS antenna ports selected from the $P_{tot}$ CSI-RS antenna ports according to the index numbers of the $P_{tot}$ CSI-RS antenna ports, the processor 602 is specifically configured to: sort the index numbers of the $P_{tot}$ CSI-RS antenna ports; and select the P CSI-RS antenna ports with consecutive index numbers from the $P_{tot}$ CSI-RS antenna ports according to a sorting result; where the P CSI-RS antenna ports are sorted in ascending order of the index numbers, beams in a first polarization direction are sent to the terminal side through first P/2 CSI-RS antenna ports sorted by the index numbers, and beams in a second polarization direction are sent to the terminal side through last P/2 CSI-RS antenna ports sorted by the index numbers.

Optionally, when configuring the index numbers of the $P_{tot}$ CSI-RS antenna ports respectively based on the sorting result of the K CSI-RS resources, the processor 602 is specifically configured to: for each CSI-RS resource in the K CSI-RS resources, sequentially divide the $P_k$ antenna ports included in the each CSI-RS resource into a first antenna port group and a second antenna port group, where the first antenna port group and the second antenna port group respectively include $\frac{P_k}{2}$ antenna ports; and sequentially perform joint numbering on index numbers of the CSI-RS antenna ports of the first antenna port group and the second antenna port group in each CSI-RS resource based on the sorting result of the K CSI-RS resources, where an index number of each CSI-RS antenna port in the first antenna port group is before an index number of each CSI-RS antenna port in the second antenna port group; where when determining the P CSI-RS antenna ports selected from the $P_{tot}$ CSI-RS antenna ports according to the index numbers of the $P_{tot}$ CSI-RS antenna ports, the processor 602 is specifically configured to: select P/2 CSI-RS antenna ports with consecutive index numbers from the first antenna port group; and select P/2 CSI-RS antenna ports with consecutive index numbers from the second antenna port group; where beams in a first polarization direction are sent to the terminal side through the P/2 CSI-RS antenna ports of the first antenna port group, and beams in a second polarization direction are sent to the terminal side through the P/2 CSI-RS antenna ports of the second antenna port group.

Optionally, when determining the K CSI-RS resources configured for the terminal side, the processor 602 is specifically configured to: determine the K CSI-RS resources configured for the terminal side from CSI-RS resources included in at least one configured CSI-RS resource set.

Optionally, when determining the K CSI-RS resources configured for the terminal side from the CSI-RS resources included in the at least one configured CSI-RS resource set, the processor 602 is specifically configured to: sort the CSI-RS resources included in the at least one CSI-RS resource set based on identification information of the CSI-RS resources included in the at least one CSI-RS resource set; and determine the K CSI-RS resources configured for the terminal side based on sorting.

Optionally, when determining the K CSI-RS resources configured for the terminal side from the CSI-RS resources included in the at least one configured CSI-RS resource set, the processor 602 is specifically configured to: for the at least one CSI-RS resource set, divide Ks CSI-RS resources included in the CSI-RS resource set into M resource groups, where M≥2, and each of the resource groups includes at least one CSI-RS resource; and determine the K CSI-RS resources configured for the terminal side from the CSI-RS resources included in the M resource groups.

Optionally, after dividing the Ks CSI-RS resources included in the CSI-RS resource set into M resource groups, the processor 602 is further configured to: for each resource group of the M resource groups, select a first CSI-RS resource from a resource group, select a second CSI-RS resource from other resource groups except for the resource group, and combine the first CSI-RS resource and the second CSI-RS resource into a CSI-RS resource pair; where when determining the K CSI-RS resources from the CSI-RS resources included in the M resource groups, the processor 602 is specifically configured to: determine the K CSI-RS resources from CSI-RS resources included in N CSI-RS resource pairs, where N is the quantity of resource pairs included in the M resource groups.

Optionally, when determining the K CSI-RS resources configured for the terminal side, the processor 602 is specifically configured to: determine the K CSI-RS resources configured for the terminal side according to information of the CSI-RS resources carried in a received signaling indication.

Where, as shown in Fig. 6, a bus architecture may include any quantity of interconnected buses and bridges, which are specifically linked together by various circuits of one or more processors represented by the processor 602 and a memory represented by the memory 601. The bus architecture may further link various other circuits such as a peripheral device, a voltage stabilizer and a power management circuit together, which are publicly known in the art and therefore are not further described herein. A bus interface provides an interface. The transceiver may be a plurality of elements, including a transmitter and a receiver, that provide units for communicating with various other apparatus over a transmission medium. The processor 602 is responsible for managing the bus architecture and usual processing, and the memory 601 may store data used by the processor 602 during operation execution.

Based on the same inventive concept, referring to Fig. 7, embodiments of the present disclosure provide an enhanced CSI-RS transmission apparatus, which at least includes a determining unit 701 and a sending unit 702, where, the determining unit 701 is configured to determine K CSI-RS resources configured for a terminal side, where the K CSI-RS resources include $P_{tot}$ CSI-RS antenna ports in total, where $P_{tot} = \sum_{k=1}^{K} P_k$, $P_k$ is the quantity of CSI-RS antenna ports included in the $k^{th}$ CSI-RS resource, and kE [1, K]; and the sending unit 702 is configured to select P CSI-RS antenna ports from the $P_{tot}$ CSI-RS antenna ports; and send beam-formed CSI-RSs to the terminal side through the P CSI-RS antenna ports by using P different beams respectively, where $P < P_{tot}$, and P is the quantity of beams to be sent.

Optionally, the sending unit 702 is specifically configured to: determine the P CSI-RS antenna ports selected from the $P_{tot}$ CSI-RS antenna ports according to information of the CSI-RS antenna ports carried in a received signaling indication; or sort the K CSI-RS resources based on identification information of the K CSI-RS resources, where the identification information includes at least one of IDs of the CSI-RS resources, a resource mapping position of the CSI-RS resources in a time domain, or a resource mapping position of the CSI-RS resources in a frequency domain; respectively configure index numbers of the $P_{tot}$ CSI-RS antenna ports based on a sorting result of the K CSI-RS resources; and determine the P CSI-RS antenna ports selected from the $P_{tot}$ CSI-RS antenna ports according to the index numbers of the $P_{tot}$ CSI-RS antenna ports.

Optionally, the sending unit 702 is specifically configured to: for each CSI-RS resource in the K CSI-RS resources, sequentially perform joint numbering on index numbers of the CSI-RS antenna ports included in each CSI-RS resource based on the sorting result of the K CSI-RS resources; and sort the index numbers of the $P_{tot}$ CSI-RS antenna ports; and select the P CSI-RS antenna ports with consecutive index numbers from the $P_{tot}$ CSI-RS antenna ports according to a sorting result; where the P CSI-RS antenna ports are sorted in ascending order of the index numbers, beams in a first polarization direction are sent to the terminal side through first P/2 CSI-RS antenna ports sorted by the index numbers, and beams in a second polarization direction are sent to the terminal side through last P/2 CSI-RS antenna ports sorted by the index numbers.

Optionally, the sending unit 702 is specifically configured to: for each CSI-RS resource in the K CSI-RS resources, sequentially divide the $P_k$ antenna ports included in the each CSI-RS resource into a first antenna port group and a second antenna port group, where the first antenna port group and the second antenna port group respectively include $\frac{P_k}{2}$ antenna ports; and sequentially perform joint numbering on index numbers of the CSI-RS antenna ports of the first antenna port group and the second antenna port group in each CSI-RS resource based on the sorting result of the K CSI-RS resources, where an index number of each CSI-RS antenna port in the first antenna port group is before an index number of each CSI-RS antenna port in the second antenna port group; and select P/2 CSI-RS antenna ports with consecutive index numbers from the first antenna port group; and select P/2 CSI-RS antenna ports with consecutive index numbers from the second antenna port group; where beams in a first polarization direction are sent to the terminal side through the P/2 CSI-RS antenna ports of the first antenna port group, and beams in a second polarization direction are sent to the terminal side through the P/2 CSI-RS antenna ports of the second antenna port group.

Optionally, the determining unit 701 is specifically configured to: determine the K CSI-RS resources configured for the terminal side from CSI-RS resources included in at least one configured CSI-RS resource set.

Optionally, the determining unit 701 is specifically configured to: sort the CSI-RS resources included in the at least one CSI-RS resource set based on identification information of the CSI-RS resources included in the at least one CSI-RS resource set; and determine the K CSI-RS resources configured for the terminal side based on sorting.

Optionally, the determining unit 701 is specifically configured to: for the at least one CSI-RS resource set, divide Ks CSI-RS resources included in the CSI-RS resource set into M resource groups, where M≥2, and each of the resource groups includes at least one CSI-RS resource; and determine the K CSI-RS resources configured for the terminal side from the CSI-RS resources included in the M resource groups.

Optionally, the determining unit 701 is further configured to: for each of the M resource groups, select a first CSI-RS resource from a resource group, select a second CSI-RS resource from other resource groups except for the resource group, and combine the first CSI-RS resource and the second CSI-RS resource into a CSI-RS resource pair.

Optionally, the determining unit 701 is specifically configured to: determine the K CSI-RS resources configured for the terminal side from CSI-RS resources included in N CSI-RS resource pairs, where N is the quantity of resource pairs included in the M resource groups.

Optionally, the determining unit 701 is specifically configured to: determine the K CSI-RS resources configured for the terminal side according to information of the CSI-RS resources carried in a received signaling indication.

Optionally, at least one of following configuration parameters is the same: CSI-RS resource types, CSI-RS resource bandwidths, power offsets of PDSCH REs relative to CSI-RS REs; power offsets of CSI-RS REs relative to SSS REs; or, associated QCL resources and QCL types for periodic CSI-RSs, of the K CSI-RS resources.

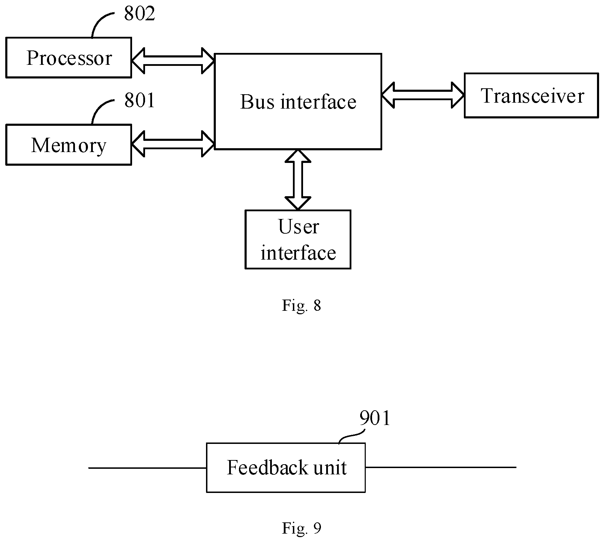

Based on the same inventive concept, referring to Fig. 8, embodiments of the present disclosure provide a computer device (e.g., the UE on the terminal side), which at least includes: a memory 801 configured to store an executable instruction; and a processor 802 configured to read and execute the executable instruction stored in the memory to: send feedback information to a network side after receiving the CSI-RS sent by the network side according to any of the above enhanced CSI-RS transmission methods, where the feedback information is determined by: select P' CSI-RS antenna ports from the P CSI-RS antenna ports; and send the feedback information of the P' CSI-RS antenna ports to the network side.

Optionally, when selecting P' CSI-RS antenna ports from the P CSI-RS antenna ports, the processor 802 is specifically configured to: select K' CSI-RS resources from the K CSI-RS resources; and select the P' CSI-RS antenna ports from CSI-RS antenna ports included in the K' CSI-RS resources.

Optionally, when sending the feedback information of the P' CSI-RS antenna ports to the network side, the processor 802 is specifically configured to: send the feedback information of the P' CSI-RS antenna ports to the network side in a bitmap manner; or send the feedback information of the P' CSI-RS antenna ports to the network side in a combination number manner.

Optionally, before sending the feedback information of the P' CSI-RS antenna ports to the network side in the combination number manner, the processor 802 is further configured to: sort the K' CSI-RS resources based on identification information of the K' CSI-RS resources, where the identification information includes at least one of IDs of the CSI-RS resources, a resource mapping position of the CSI-RS resources in a time domain, or a resource mapping position of the CSI-RS resources in a frequency domain; respectively configure index numbers of $P_{tot}'$ CSI-RS antenna ports included in the K' CSI-RS resources based on a sorting result of the K' CSI-RS resources; and select the P' CSI-RS antenna ports from the $P_{tot}'$ CSI-RS antenna ports.

Where, as shown in Fig. 8, a bus architecture may include any quantity of interconnected buses and bridges, which are specifically linked together by various circuits of one or more processors represented by the processor 802 and a memory represented by the memory 801. The bus architecture may further link various other circuits such as a peripheral device, a voltage stabilizer and a power management circuit together, which are publicly known in the art and therefore are not further described herein. A bus interface provides an interface. The transceiver may be a plurality of elements, including a transmitter and a receiver, that provide a unit for communicating with various other apparatus over a transmission medium. For different user equipment, a user interface may further be an interface capable of being externally connected and internally connected with a required device, and the connected device includes but is not limited to a keypad, a display, a speaker, a microphone, a joystick, and the like.

The processor 802 is responsible for managing the bus architecture and usual processing, and the memory 801 may store data used by the processor 802 during operation execution.

Based on the same inventive concept, referring to Fig. 9, embodiments of the present disclosure provide an apparatus for sending feedback information, which at least includes a feedback unit 901, where: the feedback unit 901 is configured to send feedback information to the network side after receiving the CSI-RS sent by the network side using any one of the methods performed by the above network device; where the feedback information is determined by: selecting P' CSI-RS antenna ports from the P CSI-RS antenna ports; and sending the feedback information of the P'

CSI-RS antenna ports to the network side.

Optionally, the feedback unit 901 is specifically configured to: select K' CSI-RS resources from the K CSI-RS resources; and select the P' CSI-RS antenna ports from CSI-RS antenna ports included in the K' CSI-RS resources.

Optionally, the feedback unit 901 is specifically configured to: send the feedback information of the P' CSI-RS antenna ports to the network side in a bitmap manner; or send the feedback information of the P' CSI-RS antenna ports to the network side in a combination number manner.

Optionally, the feedback unit 901 is further configured to: sort the K' CSI-RS resources based on identification information of the K' CSI-RS resources, where the identification information includes at least one of IDs of the CSI-RS resources, a resource mapping position of the CSI-RS resources in a time domain, or a resource mapping position of the CSI-RS resources in a frequency domain; respectively configure index numbers of $P_{tot}$' CSI-RS antenna ports included in the K' CSI-RS resources based on a sorting result of the K' CSI-RS resources; and select the P' CSI-RS antenna ports from the $P_{tot}$' CSI-RS antenna ports.

Based on the same inventive concept, embodiments of the present disclosure provide a computer-readable storage medium; where instructions in the computer-readable storage medium, when executed by a processor, cause the processor to execute any method performed on the network side in the above embodiments.

Based on the same inventive concept, embodiments of the present disclosure provide a computer-readable storage medium; where instructions in the computer-readable storage medium, when executed by a processor, cause the processor to execute any method performed on the terminal side in the above embodiments.

To sum up, in the embodiments of the present disclosure, the network side determines K CSI-RS resources configured for the terminal side, where the K CSI-RS resources include $P_{tot}$ CSI-RS antenna ports in total, where

$P_{tot} = \sum_{k=1}^{K} P_k$ , $P_k$ is the quantity of CSI-RS antenna ports included in the $k^{th}$ CSI-RS resource, and kE [1, K]; the network side selects P CSI-RS antenna ports from $P_{tot}$ CSI-RS antenna ports; and the network side sends beam-formed CSI-RSs to the terminal side through the P CSI-RS antenna ports by using P different beams respectively, where P < $P_{tot}$, and P is the quantity of beams to be sent. In this way, when the quantity P of beams to be sent is less than the total quantity $P_{tot}$ of configured CSI-RS antenna ports, the network side may select part of CSI-RS antenna ports for sending the beam-formed CSI-RSs to the terminal side from the $P_{tot}$ configured CSI-RS antenna ports, which can effectively reduce the sending power on the network side, and can also effectively reduce the feedback overhead on the terminal side at the same time, compared with the solution that the network side needs to send the beam-formed CSI-RS based on each configured CSI-RS antenna port in the related art.

The skilled in the art should understand that the embodiments of the present disclosure may be provided as a method, a system or a computer program product. Therefore, in the present disclosure forms of full hardware embodiments, full software embodiments, or embodiments combining software and hardware aspects can be adopted. Moreover, in the present disclosure, a form of the computer program products implemented on one or more computer available storage mediums (including but not limited to a disk memory, compact disc read only memory (CD-ROM), an optical memory and the like) containing computer available program codes can be adopted.

The present disclosure is described with reference to flow diagrams and/or block diagrams of the methods, the devices (systems), and computer program products according to the present disclosure. It should be understood that each flow and/or block in the flow diagrams and/or the block diagrams and combinations of the flows and/or the blocks in the flow diagrams and/or the block diagrams can be implemented by computer program instructions. These computer program instructions may be provided to a processor of a general-purpose computer, a special-purpose computer, an embedded processing machine or other programmable data processing devices to generate a machine, such that the instructions, when executed by the processor of the computer or other programmable data processing devices, generate an apparatus for implementing functions specified in one or more flows in the flow diagrams and/or one or more blocks in the block diagrams.

These computer program instructions may also be stored in a computer readable memory which can guide the computer or other programmable data processing devices to work in a specific mode, thus the instructions stored in the computer readable memory generates an article of manufacture that includes a commander apparatus that implement the functions specified in one or more flows in the flow diagrams and/or one or more blocks in the block diagrams.

These computer program instructions may also be loaded to the computer or other programmable data processing devices, so that a series of operating steps are executed on the computer or other programmable devices to generate computer-implemented processing, such that the instructions executed on the computer or other programmable devices provide steps for implementing the functions specified in one or more flows in the flow diagrams and/or one or more blocks in the block diagrams.

Obviously, those skilled in the art can make various modifications and variations to the present disclosure without departing from the spirit and scope of the present disclosure. In this way, if these modifications and variations of the present disclosure fall within the scope of the claims of the present disclosure and their equivalent art, the present disclosure also intends to include these modifications and variations.

**Claims**

1. An enhanced channel state information reference signal (CSI-RS) transmission method, comprising:

   determining K quantity of CSI-RS resources configured for a terminal side, wherein the K quantity of CSI-RS resources comprise $P_{tot}$ quantity of CSI-RS antenna ports in total, wherein $P_{tot} = \sum_{k=1}^{K} P_k$ , $P_k$ is a quantity of CSI-RS antenna ports in a $k^{th}$ CSI-RS resource, and k E [1, K];
   selecting P quantity of CSI-RS antenna ports from the $P_{tot}$ quantity of CSI-RS antenna ports; and
   sending beam-formed CSI-RSs to the terminal side through the P quantity of CSI-RS antenna ports by using P different beams respectively, wherein $P < P_{tot}$, and P is a quantity of beams to be sent.

2. The method according to claim 1, wherein the selecting of P quantity of CSI-RS antenna ports from the $P_{tot}$ quantity of CSI-RS antenna ports comprises:

   determining the P quantity of CSI-RS antenna ports selected from the $P_{tot}$ quantity of CSI-RS antenna ports according to information of CSI-RS antenna ports carried in a received signaling indication; or,
   sorting the K quantity of CSI-RS resources based on identification information of the K quantity of CSI-RS resources; respectively configuring index numbers of the $P_{tot}$ quantity of CSI-RS antenna ports based on a sorting result of the K quantity of CSI-RS resources; and determining the P quantity of CSI-RS antenna ports selected from the $P_{tot}$ quantity of CSI-RS antenna ports according to the index numbers of the $P_{tot}$ quantity of CSI-RS antenna ports; wherein the identification information comprises at least one of identity documents (IDs) of the CSI-RS resources, a resource mapping position of the CSI-RS resources in a time domain, or a resource mapping position of the CSI-RS resources in a frequency domain.

3. The method according to claim 2, wherein the configuring of the index numbers of the $P_{tot}$ quantity of CSI-RS antenna ports respectively based on the sorting result of the K quantity of CSI-RS resources comprises:

   for each CSI-RS resource in the K quantity of CSI-RS resources, sequentially performing joint numbering on index numbers of CSI-RS antenna ports contained in each CSI-RS resource based on the sorting result of the K quantity of CSI-RS resources;
   wherein the determining of the P quantity of CSI-RS antenna ports selected from the $P_{tot}$ quantity of CSI-RS antenna ports according to the index numbers of the $P_{tot}$ quantity of CSI-RS antenna ports comprises:
   sorting the index numbers of the $P_{tot}$ quantity of CSI-RS antenna ports; and selecting the P quantity of CSI-RS antenna ports with consecutive index numbers from the $P_{tot}$ quantity of CSI-RS antenna ports according to a sorting result; wherein the P quantity of CSI-RS antenna ports are sorted in ascending order of the index numbers, beams in a first polarization direction are sent to the terminal side through first P/2 quantity of CSI-RS antenna ports sorted by the index numbers, and beams in a second polarization direction are sent to the terminal side through last P/2 quantity of CSI-RS antenna ports sorted by the index numbers.

4. The method according to claim 2, wherein the configuring of the index numbers of the $P_{tot}$ quantity of CSI-RS antenna ports respectively based on the sorting result of the K quantity of CSI-RS resources comprises:

   for each CSI-RS resource in the K quantity of CSI-RS resources, sequentially dividing the $P_k$ quantity of antenna ports in the each CSI-RS resource into a first antenna port group and a second antenna port group, wherein the first antenna port group and the second antenna port group respectively comprise $\dfrac{P_k}{2}$ quantity of antenna ports; and
   sequentially performing joint numbering on index numbers of the CSI-RS antenna ports in the first antenna port group and the second antenna port group in each CSI-RS resource based on the sorting result of the K quantity of CSI-RS resources, wherein an index number of each CSI-RS antenna port in the first antenna port group is before an index number of each CSI-RS antenna port in the second antenna port group;
   wherein the determining of the P quantity of CSI-RS antenna ports selected from the $P_{tot}$ quantity of CSI-RS antenna ports according to the index numbers of the $P_{tot}$ quantity of CSI-RS antenna ports comprises:

selecting P/2 quantity of CSI-RS antenna ports with consecutive index numbers from the first antenna port group; and selecting P/2 quantity of CSI-RS antenna ports with consecutive index numbers from the second antenna port group; wherein beams in a first polarization direction are sent to the terminal side through the P/2 quantity of CSI-RS antenna ports of the first antenna port group, and beams in a second polarization direction are sent to the terminal side through the P/2 quantity of CSI-RS antenna ports of the second antenna port group.

5. The method according to claim 1, wherein the determining of the K quantity of CSI-RS resources configured for the terminal side comprises:
determining the K quantity of CSI-RS resources configured for the terminal side from CSI-RS resources contained in at least one configured CSI-RS resource set.

6. The method according to claim 5, wherein the determining of the K quantity of CSI-RS resources configured for the terminal side from the CSI-RS resources in the at least one configured CSI-RS resource set comprises:

sorting the CSI-RS resources in the at least one CSI-RS resource set based on identification information of the CSI-RS resources in the at least one CSI-RS resource set; and
determining the K quantity of CSI-RS resources configured for the terminal side based on the sorting.

7. The method according to claim 5, wherein the determining of the K quantity of CSI-RS resources configured for the terminal side from the CSI-RS resources in the at least one configured CSI-RS resource set, comprises:

for the at least one CSI-RS resource set, dividing Ks quantity of CSI-RS resources in the CSI-RS resource set into M quantity of resource groups, wherein $M \geq 2$, and each of the resource groups comprises at least one CSI-RS resource; and
determining the K quantity of CSI-RS resources configured for the terminal side from CSI-RS resources in the M quantity of resource groups.

8. The method according to claim 7, wherein after the dividing the Ks quantity of CSI-RS resources in the CSI-RS resource set into the M quantity of resource groups, the method further comprises:

for each resource group of the M quantity of resource groups, selecting a first CSI-RS resource from the resource group, selecting a second CSI-RS resource from other resource groups except for the resource group, and combining the first CSI-RS resource and the second CSI-RS resource into a CSI-RS resource pair;
wherein the determining of the K quantity of CSI-RS resources configured for the terminal side from the CSI-RS resources in the M quantity of resource groups comprises:
determining the K quantity of CSI-RS resources configured for the terminal side from CSI-RS resources in N quantity of CSI-RS resource pairs, wherein N is a quantity of resource pairs in the M quantity of resource groups.

9. The method according to any one of claims 5-8, wherein the determining of the K quantity of CSI-RS resources configured for the terminal side comprises:
determining the K quantity of CSI-RS resources configured for the terminal side according to information of the CSI-RS resources carried in a received signaling indication.

10. The method according to any one of claims 1-8, wherein at least one of following configuration parameters: CSI-RS resource types, CSI-RS resource bandwidths, power offsets of physical downlink shared channel (PDSCH) resource elements (REs) relative to CSI-RS REs, power offsets of the CSI-RS REs relative to secondary synchronization signal (SSS) REs, or associated quasi co-located (QCL) resources and QCL types for periodic CSI-RSs, of the K quantity of CSI-RS resources is same.

11. A method for sending feedback information, comprising:
sending feedback information to a network side after receiving the CSI-RSs sent by the network side using the method of any one of claims 1-10; wherein the feedback information is determined by:

selecting P' quantity of CSI-RS antenna ports from the P quantity of CSI-RS antenna ports; and
sending the feedback information of the P' quantity of CSI-RS antenna ports to the network side.

12. The method according to claim 11, wherein the selecting of the P' quantity of CSI-RS antenna ports from the P quantity of CSI-RS antenna ports comprises:

selecting K' quantity of CSI-RS resources from the K quantity of CSI-RS resources; and
selecting P' quantity of CSI-RS antenna ports from CSI-RS antenna ports contained in the K' quantity of CSI-RS resources.

13. The method according to any one of claims 11-12, wherein the sending of the feedback information of the P' quantity of CSI-RS antenna ports to the network side comprises:

sending the feedback information of the P' quantity of CSI-RS antenna ports to the network side in a bitmap manner; or
sending the feedback information of the P' quantity of CSI-RS antenna ports to the network side in a combination number manner.

14. The method according to claim 13, wherein before the sending the feedback information of the P' quantity of CSI-RS antenna ports to the network side in the combination number manner, the method further comprises:

sorting the K' quantity of CSI-RS resources based on identification information of the K' quantity of CSI-RS resources, wherein the identification information comprises at least one of identity documents (IDs) of the CSI-RS resources, a resource mapping position of the CSI-RS resources in a time domain, or a resource mapping position of the CSI-RS resources in a frequency domain;
respectively configuring index numbers of $P_{tot}$' quantity of CSI-RS antenna ports contained in the K' quantity of CSI-RS resources based on a sorting result of the K' quantity of CSI-RS resources; and
selecting the P' quantity of CSI-RS antenna ports from the $P_{tot}$' quantity of CSI-RS antenna ports.

15. A network device, comprising:

a memory configured to store an executable instruction; and
a processor configured to read and execute the executable instruction stored in the memory to:

determine K channel state information reference signal (CSI-RS) resources configured for a terminal side, wherein the K quantity of CSI-RS resources comprise $P_{tot}$ quantity of CSI-RS antenna ports in total, wherein $P_{tot} = \sum_{k=1}^{K} P_k$, $P_k$ is a quantity of CSI-RS antenna ports in a $k^{th}$ CSI-RS resource, and k $\in$ [1, K]; and
select P quantity of CSI-RS antenna ports from the $P_{tot}$ quantity of CSI-RS antenna ports; and
send beam-formed CSI-RSs to the terminal side through the P quantity of CSI-RS antenna ports by using P different beams respectively, wherein P < $P_{tot}$, and P is a quantity of beams to be sent.

16. The device according to claim 15, wherein when selecting P quantity of CSI-RS antenna ports from the $P_{tot}$ quantity of CSI-RS antenna ports, the processor is specifically configured to:

determine the P quantity of CSI-RS antenna ports selected from the $P_{tot}$ quantity of CSI-RS antenna ports according to information of CSI-RS antenna ports carried in a received signaling indication; or,
sort the K quantity of CSI-RS resources based on identification information of the K quantity of CSI-RS resources; respectively configure index numbers of the $P_{tot}$ quantity of CSI-RS antenna ports based on a sorting result of the K quantity of CSI-RS resources; and determine the P quantity of CSI-RS antenna ports selected from the $P_{tot}$ quantity of CSI-RS antenna ports according to the index numbers of the $P_{tot}$ quantity of CSI-RS antenna ports; wherein the identification information comprises at least one of identity documents (IDs) of the CSI-RS resources, a resource mapping position of the CSI-RS resources in a time domain, or a resource mapping position of the CSI-RS resources in a frequency domain.

17. The device according to claim 16, wherein when configuring the index numbers of the $P_{tot}$ quantity of CSI-RS antenna ports respectively based on the sorting result of the K quantity of CSI-RS resources, the processor is specifically configured to:

for each CSI-RS resource in the K quantity of CSI-RS resources, sequentially perform joint numbering on index numbers of CSI-RS antenna ports contained in each CSI-RS resource based on the sorting result of the K quantity of CSI-RS resources;
wherein when determining the P quantity of CSI-RS antenna ports selected from the $P_{tot}$ quantity of CSI-RS antenna ports according to the index numbers of the $P_{tot}$ quantity of CSI-RS antenna ports, the processor is specifically configured to:

sort the index numbers of the $P_{tot}$ quantity of CSI-RS antenna ports; and select the P quantity of CSI-RS antenna ports with consecutive index numbers from the $P_{tot}$ quantity of CSI-RS antenna ports according to a sorting result; wherein the P quantity of CSI-RS antenna ports are sorted in ascending order of the index numbers, beams in a first polarization direction are sent to the terminal side through first P/2 quantity of CSI-RS antenna ports sorted by the index numbers, and beams in a second polarization direction are sent to the terminal side through last P/2 quantity of CSI-RS antenna ports sorted by the index numbers.

18. The device according to claim 16, wherein when configuring the index numbers of the $P_{tot}$ quantity of CSI-RS antenna ports respectively based on the sorting result of the K quantity of CSI-RS resources, the processor is specifically configured to:

for each CSI-RS resource in the K quantity of CSI-RS resources, sequentially divide the $P_k$ quantity of antenna ports in the each CSI-RS resource into a first antenna port group and a second antenna port group, wherein the first antenna port group and the second antenna port group respectively comprise $\dfrac{P_k}{2}$ quantity of antenna ports; and

sequentially perform joint numbering on index numbers of the CSI-RS antenna ports of the first antenna port group and the second antenna port group in each CSI-RS resource based on the sorting result of the K quantity of CSI-RS resources, wherein an index number of each CSI-RS antenna port in the first antenna port group is before an index number of each CSI-RS antenna port in the second antenna port group;

wherein when determining the P quantity of CSI-RS antenna ports selected from the $P_{tot}$ quantity of CSI-RS antenna ports according to the index numbers of the $P_{tot}$ quantity of CSI-RS antenna ports, the processor is specifically configured to:

select P/2 quantity of CSI-RS antenna ports with consecutive index numbers from the first antenna port group; and select P/2 quantity of CSI-RS antenna ports with consecutive index numbers from the second antenna port group; wherein beams in a first polarization direction are sent to the terminal side through the P/2 quantity of CSI-RS antenna ports of the first antenna port group, and beams in a second polarization direction are sent to the terminal side through the P/2 quantity of CSI-RS antenna ports of the second antenna port group.

19. The device according to claim 15, wherein when determining the K quantity of CSI-RS resources configured for the terminal side, the processor is specifically configured to:
determine the K quantity of CSI-RS resources configured for the terminal side from CSI-RS resources in at least one configured CSI-RS resource set.

20. The device according to claim 19, wherein when determining the K quantity of CSI-RS resources configured for the terminal side from the CSI-RS resources in the at least one configured CSI-RS resource set, the processor is specifically configured to:

sort the CSI-RS resources in the at least one CSI-RS resource set based on identification information of the CSI-RS resources in the at least one CSI-RS resource set; and
determine the K quantity of CSI-RS resources configured for the terminal side based on the sorting.

21. The device according to claim 19, wherein when determining the K quantity of CSI-RS resources configured for the terminal side from the CSI-RS resources in the at least one configured CSI-RS resource set, the processor is specifically configured to:

for the at least one CSI-RS resource set, divide Ks quantity of CSI-RS resources in the CSI-RS resource set into M quantity of resource groups, wherein M≥2, and each of the resource groups comprises at least one CSI-RS resource; and
determine the K quantity of CSI-RS resources configured for the terminal side from the CSI-RS resources in the M quantity of resource groups.

22. The device according to claim 21, wherein after the dividing the Ks quantity of CSI-RS resources in the CSI-RS resource set into the M quantity of resource groups, the processor is further configured to:

for each resource group of the M quantity of resource groups, select a first CSI-RS resource from the resource group, select a second CSI-RS resource from other resource groups except for the resource group, and combine the first CSI-RS resource and the second CSI-RS resource into a CSI-RS resource pair;

wherein when determining the K quantity of CSI-RS resources configured for the terminal side from the CSI-RS resources in the M quantity of resource groups, the processor is specifically configured to:

determine the K quantity of CSI-RS resources configured for the terminal side from CSI-RS resources in N quantity of CSI-RS resource pairs, wherein N is a quantity of resource pairs in the M quantity of resource groups.

23. The device according to any one of claims 19-22, wherein when determining the K quantity of CSI-RS resources configured for the terminal side, the processor is specifically configured to:

determine the K quantity of CSI-RS resources configured for the terminal side according to information of the CSI-RS resources carried in a received signaling indication.

24. The device according to any one of claims 15-22, wherein at least one of following configuration parameters: CSI-RS resource types, CSI-RS resource bandwidths, power offsets of physical downlink shared channel (PDSCH) resource elements (REs) relative to CSI-RS REs, power offsets of CSI-RS REs relative to secondary synchronization signal (SSS) REs, or associated quasi co-located (QCL) resources and QCL types for periodic CSI-RSs, of the K quantity of CSI-RS resources is same.

25. A computer device, comprising:

a memory configured to store an executable instruction; and
a processor configured to read and execute the executable instruction stored in the memory to:
send feedback information to a network side after receiving the CSI-RS sent by the network side using the method of any one of claims 1-10, wherein the feedback information is determined by:

select P' quantity of CSI-RS antenna ports from the P quantity of CSI-RS antenna ports; and
send the feedback information of the P' quantity of CSI-RS antenna ports to the network side.

26. The device according to claim 25, wherein when selecting P' quantity of CSI-RS antenna ports from the P quantity of CSI-RS antenna ports, the processor is specifically configured to:

select K' quantity of CSI-RS resources from the K quantity of CSI-RS resources; and
select the P' quantity of CSI-RS antenna ports from CSI-RS antenna ports contained in the K' quantity of CSI-RS resources.

27. The device according to any one of claims 25-26, wherein when sending the feedback information of the P' quantity of CSI-RS antenna ports to the network side, the processor is specifically configured to:

send the feedback information of the P' quantity of CSI-RS antenna ports to the network side in a bitmap manner; or
send the feedback information of the P' quantity of CSI-RS antenna ports to the network side in a combination number manner.

28. The device according to claim 27, wherein before the sending the feedback information of the P' quantity of CSI-RS antenna ports to the network side in the combination number manner, the processor is further configured to:

sort the K' quantity of CSI-RS resources based on identification information of the K' quantity of CSI-RS resources, wherein the identification information comprises at least one of identity documents (IDs) of the CSI-RS resources, a resource mapping position of the CSI-RS resources in a time domain, or a resource mapping position of the CSI-RS resources in a frequency domain;
respectively configure index numbers of $P_{tot}'$ quantity of CSI-RS antenna ports contained in the K' quantity of CSI-RS resources based on a sorting result of the K' quantity of CSI-RS resources; and
select the P' quantity of CSI-RS antenna ports from the $P_{tot}'$ quantity of CSI-RS antenna ports.

29. An enhanced channel state information reference signal (CSI-RS) transmission apparatus, comprising:

a determining unit, configured to determine K quantity of CSI-RS resources configured for a terminal side, wherein the K quantity of CSI-RS resources comprise $P_{tot}$ quantity of CSI-RS antenna ports in total, wherein

$$P_{tot} = \sum_{k=1}^{K} P_k$$
, $P_k$ is a quantity of CSI-RS antenna ports in a $k^{th}$ CSI-RS resource, and $k \in [1, K]$; and

a sending unit, configured to select P quantity of CSI-RS antenna ports from the $P_{tot}$ quantity of CSI-RS antenna ports; and send beam-formed CSI-RSs to the terminal side through the P quantity of CSI-RS antenna ports by using P different beams respectively, wherein $P < P_{tot}$, and P is a quantity of beams to be sent.

30. The apparatus according to claim 29, wherein the sending unit is specifically configured to:

determine the P quantity of CSI-RS antenna ports selected from the $P_{tot}$ quantity of CSI-RS antenna ports according to information of CSI-RS antenna ports carried in a received signaling indication; or
sort the K quantity of CSI-RS resources based on identification information of the K quantity of CSI-RS resources; respectively configure index numbers of the $P_{tot}$ quantity of CSI-RS antenna ports based on a sorting result of the K quantity of CSI-RS resources; and determine the P quantity of CSI-RS antenna ports selected from the $P_{tot}$ quantity of CSI-RS antenna ports according to the index numbers of the $P_{tot}$ quantity of CSI-RS antenna ports; wherein the identification information comprises at least one of identity documents (IDs) of the CSI-RS resources, a resource mapping position of the CSI-RS resources in a time domain, or a resource mapping position of the CSI-RS resources in a frequency domain.

31. The apparatus according to claim 29, wherein the determining unit is specifically configured to:
determine the K quantity of CSI-RS resources configured for the terminal side from CSI-RS resources in at least one configured CSI-RS resource set.

32. An apparatus for sending feedback information, comprising:
a feedback unit, configured to send feedback information to a network side after receiving the CSI-RS sent by the network side using the method of any one of claims 1-10; wherein the feedback information is determined by:

selecting P' quantity of CSI-RS antenna ports from the P quantity of CSI-RS antenna ports; and
sending the feedback information of the P' quantity of CSI-RS antenna ports to the network side.

33. A computer-readable storage medium, wherein instructions in the computer-readable storage medium, when executed by a processor, cause the processor to execute the method according to any one of claims 1-10, or the method according to any one of claims 11-14.

Fig. 1

Fig. 2

The network side determines K CSI-RS resources configured for the terminal side, where the K CSI-RS resources include $P_{tot}$ CSI-RS antenna ports in total, where $P_{tot} = \sum_{k=1}^{K} P_k$, $P_k$ is the quantity of CSI-RS antenna ports included in the $k^{th}$ CSI-RS resource, and $k \in [1, K]$.

300

The network side selects P CSI-RS antenna ports from the $P_{tot}$ CSI-RS antenna ports; and sends beam-formed CSI-RSs to the terminal side through the P CSI-RS antenna ports by using P different beams respectively; where $P < P_{tot}$, and P is the quantity of beams to be sent.

310

Fig. 3

$K_s = K_1 + K_2$

| Group1 $K_1$ | Group2 $K_2$ |
|---|---|

N resource pairs

Fig. 4

P' CSI-RS antenna ports are selected from the P CSI-RS antenna ports ⌐ 500

The feedback information of the P' CSI-RS antenna ports is sent to the network side ⌐ 510

Fig. 5

⌐ 602
Processor

⌐ 601
Memory

Bus interface

Transceiver

Fig. 6

701
Determining unit

702
Sending unit

Fig. 7

802

Processor

801

Memory

Bus interface

Transceiver

User
interface

Fig. 8

901

Feedback unit

Fig. 9

<table>
<tr><td colspan="2"><b>INTERNATIONAL SEARCH REPORT</b></td><td colspan="2">International application No.<br><b>PCT/CN2022/079722</b></td></tr>
</table>

**A. CLASSIFICATION OF SUBJECT MATTER**

H04W 16/28(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; CNABS; VEN; USTXT; WOTXT, EPTXT, CNKI; 3GPP: 信道状态信息, 天线, 端口, 波束, 待发送, 选择, 选取, 数目, 数量, 个数, CSI-RS, beam, less, than, port, select, number

**C. DOCUMENTS CONSIDERED TO BE RELEVANT**

| Category* | Citation of document, with indication, where appropriate, of the relevant passages | Relevant to claim No. |
|---|---|---|
| X | CN 109690969 A (LG ELECTRONICS INC.) 26 April 2019 (2019-04-26) description, paragraphs [0006]-[0282] | 1-33 |
| A | CN 108352882 A (TELEFONAKTIEBOLAGET LM ERICSSON (PUBL)) 31 July 2018 (2018-07-31) entire document | 1-33 |
| A | CN 107733476 A (ZTE CORP.) 23 February 2018 (2018-02-23) entire document | 1-33 |
| A | CN 111213325 A (LG ELECTRONICS INC.) 29 May 2020 (2020-05-29) entire document | 1-33 |
| A | WO 2021042349 A1 (QUALCOMM INCORPORATED et al.) 11 March 2021 (2021-03-11) entire document | 1-33 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 May 2022** | **19 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/079722**

| Patent document cited in search report | | | Publication date (day/month/year) | Patent family member(s) | | | Publication date (day/month/year) |
|---|---|---|---|---|---|---|---|
| CN | 109690969 | A | 26 April 2019 | KR | 20210147113 | A | 06 December 2021 |
| | | | | WO | 2018021865 | A1 | 01 February 2018 |
| | | | | KR | 20190031568 | A | 26 March 2019 |
| | | | | EP | 3490162 | A1 | 29 May 2019 |
| | | | | US | 2021126689 | A1 | 29 April 2021 |
| | | | | US | 2019173553 | A1 | 06 June 2019 |
| | | | | EP | 3490162 | A4 | 06 May 2020 |
| | | | | US | 10917153 | B2 | 09 February 2021 |
| | | | | KR | 102333402 | B1 | 30 November 2021 |
| CN | 108352882 | A | 31 July 2018 | JP | 2018533865 | A | 15 November 2018 |
| | | | | WO | 2017078588 | A1 | 11 May 2017 |
| | | | | AR | 106600 | A1 | 31 January 2018 |
| | | | | EP | 3332487 | A1 | 13 June 2018 |
| | | | | US | 2017264405 | A1 | 14 September 2017 |
| | | | | IN | 201817008737 | A | 08 June 2018 |
| | | | | ID | 201808164 | A | 03 August 2018 |
| | | | | US | 10263746 | B2 | 16 April 2019 |
| | | | | ZA | 201801608 | A | 31 July 2019 |
| | | | | EP | 3332487 | B1 | 15 January 2020 |
| | | | | CN | 108352882 | B | 26 October 2021 |
| CN | 107733476 | A | 23 February 2018 | WO | 2018028429 | A1 | 15 February 2018 |
| | | | | US | 2019260430 | A1 | 22 August 2019 |
| | | | | US | 11101852 | B2 | 24 August 2021 |
| | | | | CN | 107733476 | B | 22 June 2021 |
| CN | 111213325 | A | 29 May 2020 | US | 2020204239 | A1 | 25 June 2020 |
| | | | | EP | 3641155 | A1 | 22 April 2020 |
| | | | | WO | 2018230975 | A1 | 20 December 2018 |
| | | | | KR | 20200008595 | A | 28 January 2020 |
| | | | | EP | 3641155 | A4 | 17 March 2021 |
| WO | 2021042349 | A1 | 11 March 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110362116X